# EUROPÄISCHE PATENTANMELDUNG

(11) **EP 4 588 626 A1**
(43) Veröffentlichungstag der Anmeldung: **23.07.2025**
(21) Anmeldenummer: 25152248.8
(22) Anmeldetag: 16.01.2025
(51) Int. Cl.: B25J 15/02, B25J 9/12

(54) **GREIFVORRICHTUNG**

(30) Priorität: 17.01.2024 EP 24152378
(71) Anmelder: NTI AG, 8957 Spreitenbach (CH)
(72) Erfinder: Rohner, Ronald, Remetschwil (CH); Blumer, Ernst, Zürich (CH)
(74) Vertreter: Bohest AG

(57) **Zusammenfassung**

Eine Greifvorrichtung, umfasst einen elektrischen Linearmotor (1) mit einem Motorstator (10) und einem Motorläufer (12), der in einer Längsrichtung bewegbar ist, einen ersten Greiferfinger (31) und einen zweiten Greiferfinger (32), einen Umlenkmechanismus (4), der mit dem Motorläufer (12) sowie mit mindestens einem der ersten und zweiten Greiferfinger (31, 32) gekoppelt ist, und einen Konstantkraftgeber (2) mit einem Stator (20) und einem Läufer (21), der relativ zum Stator (20) in der Längsrichtung bewegbar ist. Der Stator (20) weist einen magnetisch leitenden oder permanentmagnetischen Statorbereich (23) auf und der Läufer (21) einen permanentmagnetischen oder magnetisch leitenden Läuferbereich (22). In einer Greifposition des ersten (31) und des zweiten Greiferfingers (32) sind der Läufer (21) und der Stator (20) in einer aktiven Position angeordnet, in der der permanentmagnetische oder magnetisch leitende Läuferbereich (22) und der magnetisch leitende oder permanentmagnetische Statorbereich (23) in Längsrichtung lediglich teilweise überlappend angeordnet sind. In einer geöffneten Position des ersten (31) und des zweiten Greiferfingers (32) sind der Läufer (21) und der Stator (20) in einer inaktiven Position angeordnet, in welcher der permanentmagnetische oder magnetisch leitende Läuferbereich (22) und der magnetisch leitende oder permanentmagnetische Statorbereich (23) in Längsrichtung nicht-überlappend angeordnet sind.

## Beschreibung

Die vorliegende Erfindung betrifft eine Greifvorrichtung gemäss Anspruch 1. Insbesondere betrifft die Erfindung eine Greifvorrichtung mit einem tubularen elektrischen Linearmotor.

Greifvorrichtungen werden in verschiedenen Industriebereichen zur automatisierten Handhabung von Objekten eingesetzt. Bei einem weit verbreiteten Typ von Greifvorrichtung werden (mindestens) zwei Greiferfinger zum Greifen eines Objekts eingesetzt, die entweder mit einer Parallelbewegung (Parallelgreifer) der zwei Greiferfinger aufeinander zu oder mit einer Zangenbewegung (Schwenkbewegung) der zwei Greiferfinger das Greifobjekt kraft- oder formschlüssig greifen.

Um einen möglichst grossen Greifhub bei minimalem Bauraum zu ermöglichen, sind Greifvorrichtungen mit pneumatischen Zylindern mit einer Bewegungsrichtung senkrecht zur Bewegungsrichtung der Greiferfinger weit verbreitet. Typischerweise ist die Bewegungsrichtung der Greiferfinger zum Greifen des Greifobjekts horizontal und die Bewegungsrichtung des pneumatischen Zylinders vertikal. Die vertikale Bewegung des pneumatischen Zylinders wird hierbei durch einen Umlenkmechanismus in die horizontale Bewegung der Greiferfinger zum Greifen des Greifobjekts umgelenkt.

Derartige pneumatische Greifer haben zum Nachteil, dass für ein Greifen des Greifobjekts durch Formschluss der Greifvorgang mechanisch blockiert oder der Fahrweg der Greiferfinger mechanisch beschränkt werden muss, so dass die von den Greiferfingern ausgeübte Kraft minimiert ist, wenn die Greiferfinger das Greifobjekt formschlüssig greifen. Für ein Greifen des Greifobjekts durch Kraftschluss wird die Greifkraft typischerweise durch den Luftdruck im pneumatischen Zylinder geregelt. Im Falle einer relativ kleinen Greifkraft und eines entsprechend kleinen Luftdrucks erhöhen sich entsprechend die Schliesszeit und Öffnungszeit der Greiferfinger. Hinzu kommt, dass die Position der Greiferfinger nur mittels entsprechender Sensoren ermittelt werden kann, was neben den pneumatischen Leitungen das Verlegen zusätzlicher elektrischer Leitungen erfordert.

Alternativ zu den pneumatischen Zylindern können die Greiferfinger durch einen rotativen Elektromotor betrieben werden. Die rotative Bewegung des Läufers des rotativen Elektromotors wird hierbei durch ein geeignetes (Umlenk-) Getriebe in die gewünschte Bewegung der Greiferfinger umgelenkt. Um den benötigten Bauraum klein zu halten, wird für das Getriebe typischerweise ein hohes Untersetzungsverhältnis gewählt, was jedoch relativ langsame Verfahr- beziehungsweise Bewegungsgeschwindigkeiten und somit eine relativ grosse Öffnungszeit und Schliesszeit der Greiferfinger zur Folge hat. Grosse Öffnungs- und Schliesszeiten der Greiferfinger können jedoch die Produktivität der Anlage, in der die Greifvorrichtung eingesetzt wird, beeinträchtigen. Ausserdem ist die Bestimmung und Kontrolle der ausgeübten Kraft bei Greifvorrichtungen, die über einen rotativen Elektromotor betrieben werden, aufgrund der Untersetzung nur mit unzureichender Genauigkeit möglich.

In vielen Anwendungen ist es notwendig, dass im Falle eines Stromunterbruchs die Position der Greiferfinger bzw. die Greifkraft erhalten wird. Damit verhindert man, dass sich das Greifobjekt von den Greiferfingern lösen und herunterfallen kann. Dies könnte nämlich zu einer Beschädigung des Greifobjekts, und, wie beispielsweise beim Greifen von Behältern mit Chemikalien, zu einer Kontamination führen. In diesem Fall muss bei einem durch einen Elektromotor betriebenen Greifer zumindest bei kraftschlüssigen Greifvorgängen durch geeignete Massnahmen sichergestellt werden, dass die Greiferfinger in der Greifposition die benötigte Kraft aufbringen, um das Objekt im Fall eines Stromunterbruchs halten zu können.

Vor diesem Hintergrund liegt der Erfindung die Aufgabe zugrunde, eine Greifvorrichtung bereitzustellen, die es ermöglicht, die oben genannten Nachteile zu beseitigen.

Diese Aufgabe wird durch eine erfindungsgemässe Greifvorrichtung gelöst, wie sie durch die Merkmale des unabhängigen Anspruchs 1 definiert ist. Besonders vorteilhafte Weiterbildungen und Ausgestaltungen der erfindungsgemässen Greifvorrichtung ergeben sich aus den abhängigen Ansprüchen.

Eine erfindungsgemässe Greifvorrichtung umfasst
- einen elektrischen Linearmotor, insbesondere einen tubularen elektrischen Linearmotor, mit einem Motorstator und einem Motorläufer, der relativ zum Motorstator in einer Längsrichtung entlang einer Längsachse des Motorläufers bewegbar ist,
- einen ersten Greiferfinger und einen zweiten Greiferfinger, wobei der erste Greiferfinger und der zweite Greiferfinger quer zur Längsrichtung relativ zueinander bewegbar sind, und zwar aufeinander zu oder voneinander weg,
- einen Umlenkmechanismus, der mit dem Motorläufer sowie mit mindestens einem der ersten und zweiten Greiferfinger gekoppelt ist, zur Bewegung des mindestens einen der ersten und zweiten Greiferfinger quer zur Längsrichtung aufgrund einer Bewegung des Motorläufers relativ zum Motorstator entlang der Längsachse des Motorläufers. Weiterhin umfasst die Greifvorrichtung
- einen Konstantkraftgeber, mit einem Stator und einem Läufer, der relativ zum Stator in der Längsrichtung bewegbar ist, und zwar entlang einer Längsachse des Läufers;
   wobei
   - der Läufer fest mit dem Motorläufer verbunden ist und der Stator fest mit dem Motorstator verbunden ist,
   - der Stator einen magnetisch leitenden oder permanentmagnetischen Statorbereich und der Läufer einen permanentmagnetischen oder magnetisch leitenden Läuferbereich aufweist, und zumindest der Statorbereich oder der Läuferbereich permanentmagnetisch ausgebildet und in einer Magnetisierungsrichtung magnetisiert ist, die senkrecht zur Längsrichtung ist,
   und wobei der Konstantkraftgeber relativ zum Motorstator und zum Motorläufer derart angeordnet ist, dass
   - in einer Greifposition des ersten und des zweiten Greiferfingers relativ zueinander der Läufer und der Stator in einer aktiven Position angeordnet sind, in der der permanentmagnetische oder magnetisch leitende Läuferbereich und der magnetisch leitende oder permanentmagnetische Statorbereich in Längsrichtung lediglich teilweise überlappend angeordnet sind, zur Erzeugung einer vom Läufer auf den Umlenkmechanismus in Längsrichtung wirkenden Kraft zur Erhaltung der Greifposition, und
   - in einer geöffneten Position des ersten und des zweiten Greiferfingers relativ zueinander der Läufer und der Stator in einer inaktiven Position angeordnet sind, in welcher der permanentmagnetische oder magnetisch leitende Läuferbereich und der magnetisch leitende oder permanentmagnetische Statorbereich in Längsrichtung nicht-überlappend angeordnet sind, ohne Erzeugung einer vom Läufer auf den Umlenkmechanismus wirkenden Kraft.

Elektrische Linearmotoren erzeugen direkt eine lineare Bewegung des Läufers, ohne dass Getriebe oder Riemen zur Umsetzung einer Rotationsbewegung, beispielsweise des Rotors eines rotativen Elektromotors, in eine Linearbewegung nötig ist. Entsprechend lässt sich durch die Motorkraft direkt über den Motorstrom die von den Greiferfingern auf das Greifobjekt ausgeübte Greifkraft steuern und messen.

Es können beide Greiferfinger quer zur Längsrichtung bewegbar sein, oder alternativ dazu nur der erste oder der zweite Greiferfinger, wobei der jeweils andere Greiferfinger dann relativ zum Linearmotor unbeweglich angeordnet ist. Eine Bewegung der Greiferfinger 'quer zur Längsrichtung' umfasst dabei sowohl Bewegungen senkrecht zur Längsrichtung als auch solche Bewegungen, die von einer Bewegung senkrecht zur Längsrichtung abweichen und auch nicht zwingend geradlinig sein müssen (z.B. Schwenkbewegungen der Greiferfinger um eine Schwenkachse herum).

Der Umlenkmechanismus dient zur Umsetzung der Bewegung des Motorläufers relativ zum Motorstator in Richtung der Längsachse des Motorläufers in eine Relativbewegung der ersten und zweiten Greiferfinger quer zur Längsrichtung. Der Umlenkmechanismus kann entweder mit einem der ersten oder zweiten Greiferfinger zur Bewegung des ersten oder des zweiten Greiferfingers gekoppelt sein. Alternativ dazu kann der Umlenkmechanismus sowohl mit dem ersten als auch mit dem zweiten Greiferfinger gekoppelt sein, zur Bewegung sowohl des ersten als auch des zweiten Greiferfingers aufgrund einer Bewegung einer Bewegung des Motorläufers relativ zum Motorstator in Richtung der Längsachse des Motorläufers.

Der Konstantkraftgeber kann eine vom Stator (des Konstantkraftgebers) auf den Läufer (des Konstantkraftgebers) konstante Kraft ausüben. Ein Konstantkraftgeber ist beispielsweise in der EP 1 378 986 A1 beschrieben. Der Konstantkraftgeber kann einen permanent-magnetischen Läuferbereich und einen magnetisch leitenden Statorbereich aufweisen. Wenn der permanentmagnetische Läuferbereich und der magnetisch leitende Statorbereich in der Längsrichtung lediglich teilweise (also nicht vollständig) überlappend angeordnet sind, steht ein Längsbereich des permanentmagnetischen Läuferbereichs aus dem magnetisch leitenden Statorbereich hervor. In der lediglich teilweise überlappenden Anordnung überlappt also ein Längsbereich des permanentmagnetischen Läuferbereichs mit einem Längsbereich des magnetisch leitenden Statorbereichs, während ein an einem Ende des Stators aus dem magnetisch leitenden Statorbereich hervorstehender Längsbereich des permanent-magnetischen Läuferbereichs mit keinem Teil des magnetisch leitenden Statorbereichs überlappt. Was denjenigen Längsbereich des permanentmagnetischen Läuferbereich betrifft, der mit dem magnetisch leitenden Statorbereich überlappt, so wird der vom permanentmagnetischen Läuferbereich erzeugte magnetische Fluss über den magnetisch leitenden Statorbereich rückgeschlossen. Die Stärke und die Richtung der Magnetisierung ist vorzugsweise über die Länge des permanentmagnetischen Läuferbereichs konstant. Entsprechend ist in diesem Fall auch die magnetische Leitfähigkeit (Permeabilität) des magnetisch leitenden Statorbereichs über dessen Länge konstant. Aufgrund der Richtung der Magnetisierung des permanentmagnetischen Läuferbereichs senkrecht zur Längs-richtung wirkt somit keine Kraft auf denjenigen Längsbereich des Läufers, der mit dem magnetisch leitenden Statorbereich in Längsrichtung überlappt. An dem Längsende des magnetisch leitenden Statorbereichs, an dem der permanentmagnetische Läuferbereich in Längsrichtung lediglich teilweise mit dem magnetisch leitendenden Statorbereich überlappt, ist das gesamte beziehungsweise das effektive Magnetfeld bezüglich der Längsrichtung jedoch inhomogen. Das Magnetfeld fällt in der von dem besagten Längsende des magnetisch leitenden Statorbereichs weg zeigenden Richtung ab. Dadurch wird auf den jeweiligen kleinen Längsbereich des permanentmagnetischen Läuferbereichs, der sich am Längsende des magnetisch leitenden Statorbereichs befindet (aber gerade eben nicht mit dem magnetisch leitenden Statorbereich überlappt), eine anziehende Kraft ausgeübt, die den permanentmagnetischen Läuferbereich in Richtung zum magnetisch leitenden Statorbereich hin zieht. Dadurch, dass diese anziehende Kraft (unabhängig von der Längsposition des Läufers relativ zum Stator) praktisch immer nur auf denjenigen kleinen Längsbereich des permanentmagnetischen Läuferbereichs am besagten Längsende des magnetisch leitenden Statorbereichs (in dem das resultierende Magnetfeld bezüglich der Längsrichtung inhomogen ist) ausgeübt wird, wird durch den Konstantkraftgeber eine Kraft in Längsrichtung erzeugt, die unabhängig von der Längsposition des Läufers relativ zum Stator konstant ist, solange der permanentmagnetische Läuferbereich nicht vollständig mit dem magnetisch leitenden Statorbereich überlappt. Somit wird eine konstante anziehende Kraft in Längsrichtung erzeugt, die den Läufer des Konstantkraftgebers zum Stator hin zieht.

Alternativ kann der Statorbereich permanentmagnetisch und der Läuferbereich magnetisch leitend ausgebildet sein. Entsprechend ist in diesem Fall die Stärke und die Richtung der Magnetisierung vorzugsweise über die Länge des permanentmagnetischen Statorbereichs konstant. Entsprechend ist in diesem Fall auch die magnetische Leitfähigkeit (Permeabilität) des magnetisch leitenden Läuferbereichs über dessen Länge konstant. Auch in diesem Fall wird eine anziehende Kraft in Längsrichtung erzeugt, die den Läufer des Konstantkraftgebers zum Stator hin zieht. Obige Ausführungen lassen sich entsprechend daher auf diesen Fall übertragen. Als weitere Alternative ist es auch möglich, dass sowohl der Läuferbereich als auch der Statorbereich (aslso beide) permanentmagnetisch ausgebildet sind, mit beiden Magnetisierungsrichtungen senkrecht zur Längsachse. Zur Erzeugung der anziehenden Konstantkraft zeigen die beiden Magnetisierungsrichtungen in die gleiche Richtung.

Im Gegensatz zu Greifvorrichtungen, die auf pneumatischen Zylindern basieren, lässt sich mit der erfindungsgemässen Greifvorrichtung das Greifobjekt formschlüssig greifen, ohne dass der Fahrweg der Greiferfinger angepasst werden muss. Die erfindungsgemässe Greifvorrichtung ermöglicht weiterhin ein Antasten des Greifobjekts. Die Greiferfinger werden hierzu auf das Greifobjekt zu bewegt bis die Greiferfinger das Greifobjekt berühren. Daraufhin wird die Bewegung der Greiferfinger gestoppt beziehungsweise die gewünschte Greifkraft eingestellt.

Die erfindungsgemässe Greifvorrichtung hat ausserdem zum Vorteil, dass bei einem Stromunterbuch eine genügend grosse Greifkraft der Greiferfinger erhalten werden kann (nämlich durch die vom Konstantkraftgeber erzeugte Kraft). Dadurch lässt sich vermeiden, dass beispielsweise während das Greifobjekt von den Greiferfingern gegriffen wird, aufgrund eines Stromunterbruchs die Greifkraft gelöst wird und das Greifobjekt herunterfallen kann. Durch den Konstantkraftgeber wird nämlich auch dann eine Greifkraft bereitgestellt, wenn der Linearmotor aufgrund des Stromunterbruchs keine Kraft auf den Umlenkmechanismus und somit den ersten und den zweiten Greiferfinger ausüben kann.

Die Bewegung des Motorläufers des Linearmotors in Längsrichtung (und somit quer zur Bewegungsrichtung der Greiferfinger) hat zum Vorteil, dass die Greifvorrichtung als ganze nur wenig Bauraum quer zur Längsrichtung benötigt. Im Unterschied zu Greifvorrichtungen, die auf pneumatischen Zylindern basieren, und auch im Unterschied zu Greifvorrichtungen, die auf rotativen Elektromotoren basieren, lässt sich die Greifkraft auch zu verhältnismässig niedrigen Werten regeln, ohne dass die Verfahrgeschwindigkeit und somit die Öffnungszeit und die Schliesszeit der Greiferfinger beeinträchtigt werden. Aufgrund des hohen Dynamikbereichs von elektrischen Linearmotoren können die Öffnungszeit und die Schliesszeit der Greiferfinger gering sein im Vergleich zu Greifvorrichtungen mit rotativen Elektromotoren oder mit pneumatischen Zylindern.

Gemäss einem Aspekt der erfindungsgemässen Greifvorrichtung ist der Umlenkmechanismus sowohl mit dem ersten Greiferfinger als auch mit dem zweiten Greiferfinger gekoppelt, zur Bewegung sowohl des ersten Greiferfingers als auch des zweiten Greiferfingers quer zur Längsrichtung aufgrund einer Bewegung des Motorläufers relativ zum Motorstator entlang der Längsachse des Motorläufers.

Wenn sowohl der erste als auch der zweite Greiferfinger bewegbar sind, lässt sich die Greifvorrichtung mit den beiden Greiferfingern an einen Ort nahe zu dem Greifobjekt hin bewegen, und zum Greifen des Greifobjekts brauchen dann nur noch die beiden Greiferfinger durch den Linearmotor (bzw, im Zusammenwirken mit dem Konstantkraftgeber) aufeinander zu bewegt zu werden, um das Greifobjekt zu greifen. Wenn hingegen der erste oder der zweite Greiferfinger nicht bewegbar ist (also nur einer der beiden Greiferfinger bewegbar ist, während der andere nicht bewegbar ist), muss die Greifvorrichtung zunächst so angeordnet werden, dass der nicht bewegbare Greiferfinger das Greifobjekt bereits berührt, wenn eine Bewegung des Greifobjekts beim Greifvorgang vermieden werden soll. Eine Greifvorrichtung, bei der jeder der beiden Greiferfinger (also sowohl der erste und der zweite Greiferfinger) bewegbar sind, ist somit wesentlich flexibler.

Gemäss einem weiteren Aspekt der erfindungsgemässen Greifvorrichtung ist der Konstantkraftgeber entweder an einem ersten Längsende des Linearmotors angeordnet, an dem auch der erste Greiferfinger und der zweite Greiferfinger angeordnet sind, oder an einem zweiten Längsende des Linearmotors gegenüber dem ersten Längsende.

Eine solche Anordnung des Konstantkraftgebers an einem der beiden Längsenden ist günstig bezüglich des quer zur Längsrichtung (d.h. in der Bewegungsrichtung der Greiferfinger) benötigten Bauraums. Durch eine Anordnung des Konstantkraftgebers an einem Längsende des Linearmotors lässt sich nämlich der benötigte Bauraum in der Bewegungsrichtung der Greiferfinger minimieren. Zudem erlaubt dies eine Anordnung des Läufers des Konstantkraftgebers und des Motorläufers entlang einer gemeinsamen Längsachse (die Längsachse des Motorläufers und des Läufers des Konstantkraftgebers sind koinzident). Dies erlaubt eine direkte Kraftübertragung zwischen dem Läufer des Konstantkraftgebers und dem Motorläufer des Linearmotors sowie eine möglichst einfache Bauweise, ohne komplizierte Bauelemente zur Kraftübertragung.

Gemäss einem weiteren Aspekt der erfindungsgemässen Greifvorrichtung ist der Konstantkraftgeber an dem ersten Längsende des Linearmotors angeordnet, an dem auch der erste Greiferfinger und der zweite Greiferfinger angeordnet sind. In der inaktiven Position des Läufers ist der permanentmagnetische oder magnetisch leitende Läuferbereich an einem dem ersten Längsende des Linearmotors abgewandten Längsende des Stators nicht-überlappend mit dem magnetisch leitenden oder permanentmagnetischen Statorbereich angeordnet.

Diese Anordnung ist bezüglich des in Längsrichtung benötigten Bauraums vorteilhaft. Der Konstantkraftgeber kann platzsparend (in Längsrichtung) zwischen dem Motorläufer und dem Umlenkmechanismus angeordnet werden.

Gemäss einem weiteren Aspekt der erfindungsgemässen Greifvorrichtung ist der Läuferbereich permanentmagnetisch ausgebildet und in einer Magnetisierungsrichtung magnetisiert, die senkrecht zur Längsrichtung ist, wobei der Statorbereich magnetisch leitend ausgebildet ist. Diese Variante erlaubt die Anordnung eines Flusskonzentrators an einem Längsende des permanentmagnetischen Läuferbereichs des Läufers des Konstantkraftgebers.

Gemäss einem weiteren Aspekt der erfindungsgemässen Greifvorrichtung umfasst der Konstantkraftgeber einen solchen Flusskonzentrator aus einem magnetisch leitenden Material, der an einem Längsende des permanentmagnetischen Läuferbereichs des Läufers des Konstantkraftgebers angeordnet ist, welches dem ersten Längsende des Linearmotors zugewandt ist.

In der aktiven Position des Stators und des Läufers des Konstantkraftgebers ist der Flusskonzentrator mit dem magnetisch leitenden Statorbereich des Stators des Konstantkraftgebers in der Längsrichtung vollständig überlappend angeordnet.

In der inaktiven Position des Stators und des Läufers des Konstantkraftgebers ist der Flusskonzentrator an einem dem ersten Längsende des Linearmotors abgewandten Längsende des Stators in der Längsrichtung nicht-überlappend mit dem magnetisch leitenden Statorbereich des Stators angeordnet.

Der Flusskonzentrator besteht dabei aus einem magnetisch leitenden Material mit hoher Permeabilität zur möglichst effektiven Konzentration (Führung) des magnetischen Flusses.

Wie bereits erwähnt, ist in der inaktiven Position von Stator und Läufer des Konstantkraftgebers der Flusskonzentrator an einem dem ersten Längsende des Linearmotors abgewandten Längsende des Stators in der Längsrichtung nicht-überlappend mit dem magnetisch leitenden Statorbereich des Stators angeordnet. In dieser Konstellation wird der vom permanentmagnetischen Läuferbereich erzeugte magnetische Fluss im Flusskonzentrator geführt (und rückgeschlossen). Dadurch wird ein magnetischer Fluss durch den magnetisch leitenden Statorbereich vermieden und somit eine (anziehende) Kraft zwischen dem Läufer des Konstantkraftgebers und dem Stator des Konstantkraftgebers quasi verhindert bzw. nicht erzeugt, bis der Flusskonzentrator (mit kleiner Abmessung in Längsrichtung) in den magnetisch leitenden Bereich des Stators eintritt. In der aktiven Position von Stator und Läufer des Konstantkraftgebers (nach dem Eintreten des Flusskonzentrators) ist dann der Flusskonzentrator mit dem magnetisch leitenden Statorbereich des Stators des Konstantkraftgebers in der Längsrichtung vollständig überlappend angeordnet. Das heisst, dass der vom permanentmagnetischen Läuferbereich erzeugte magnetische Fluss über den magnetisch leitenden Statorbereich geführt (und rückgeschlossen) wird, was zur Erzeugung der konstanten Kraft auf den Läufer in Längsrichtung führt (solange der permamentmagnetische Läuferbereich mit dem magnetisch leitenden Statorbereich lediglich teilweise überlappt, wie oben bereits beschrieben). Mit Hilfe des Flusskonzentrators lässt sich so ein sehr kleiner Übergangsbereich von Längspositionen des Läufers relativ zum Stator zwischen der inaktiven Position und der aktiven Position von Stator und Läufer des Konstantkraftgebers schaffen, der im Vergleich zu einer Ausführung ohne Flusskonzentrator um bis zu ca. 90% verringert sein kann (scharfer, abrupter Übergang von der inaktiven in die aktive Position und umgekehrt).

Auf diese Weise lässt sich erreichen, dass der Konstantkraftgeber die konstante Kraft tatsächlich nur dann erzeugt, wenn der erste und der zweite Greiferfinger in einer (möglichen) Greifposition angeordnet sind bzw. nahezu in einer Greifposition sind, und ansonsten keine konstante Kraft erzeugt.

Gemäss einem weiteren Aspekt der erfindungsgemässen Greifvorrichtung ist die Längsachse des Motorläufers vertikal angeordnet und das erste Längsende des Linearmotors ist das untere Ende des Linearmotors, an welchem der Konstantkraftgeber und auch die Greiferfinger angeordnet sind. Die Längsachse des Läufers des Konstantkraftgebers ist ebenfalls vertikal angeordnet, und das dem ersten Längsende des Linearmotor abgewandte Längsende des Stators des Konstantkraftgebers ist das untere Ende des Stators.

Die vertikale Anordnung der Längsachse des Motorläufers und somit der Bewegungsrichtung des Motorläufers erlaubt den Einsatz der Greifvorrichtung beispielsweise in einer Pick-and- Place Anwendung, bei der das Greifobjekt gegriffen und nach dem Greifen vertikal angehoben wird, bevor die Greifvorrichtung zusammen mit dem Greifobjekt dann mittels weiterer Aktuatoren in horizontaler Richtung verfahren wird. Das Greifobjekt kann dann an einem vorbestimmten Zielort abgesetzt werden. Gerade für solche Anwendungen ist es von Vorteil, wenn der Bauraum der Greifvorrichtung in horizontaler Richtung (d.h. in der Bewegungsrichtung der Greiferfinger) klein ist.

Gemäss einem weiteren Aspekt der erfindungsgemässen Greifvorrichtung ist die Längsachse des Motorläufers des Linearmotors und die Längsachse des Läufers des Konstantkraftgebers koinzident.

Eine solche Anordnung erlaubt eine einfache, stabile und in Bewegungsrichtung der Greiferfinger besonders platzsparende Bauweise. Weiterhin ermöglicht dies, wie bereits erwähnt, eine direkte Übertragung der Kraft von dem Motorläufer und dem Läufer des Konstantkraftgebers auf den Umlenkmechanismus. Der Motorläufer und der Läufer des Konstantkraftgebers können dann zu einem gemeinsamen Läufer miteinander verbunden sein.

Gemäss einem weiteren Aspekt der erfindungsgemässen Greifvorrichtung ist der erste Greiferfinger an einem ersten Greiferschlitten und der zweite Greiferfinger an einem zweiten Greiferschlitten angeordnet. Der erste Greiferschlitten und der zweite Greiferschlitten sind in einer Führungsschiene bewegbar angeordnet, die in einer Querrichtung quer zur Längsrichtung angeordnet ist, zur Bewegung des ersten Geiferfingers und des zweiten Greiferfingers aufeinander zu oder voneinander weg in der Querrichtung durch Bewegung des ersten Greiferschlittens und des zweiten Greiferschlittens aufeinander zu oder voneinander weg in der Führungsschiene.

Die Anordnung der beiden Greiferfinger an den beiden Greiferschlitten ermöglicht eine Ausführung der Greifvorrichtung als 'Parallelgreifer'. Diese Ausführungsvariante eignet sich insbesondere für Anwendungen, in denen es beispielsweise aufgrund der Geometrie des Greifobjekts oder dessen Anordnung auf einem Support vorteilhaft ist, die Greiferfinger entlang einer vorgegebenen geraden Richtung zu dem Greifobjekt hin zu bewegen. Dies kann beispielsweise bei Greifobjekten mit einer grossen Angriffsfläche mit spezieller Ausrichtung der Fall sein.

Gemäss einem weiteren Aspekt der erfindungsgemässen Greifvorrichtung umfasst der Umlenkmechanismus einen ersten Umlenkhebel und einen zweiten Umlenkhebel. Der erste Umlenkhebel ist mit dem Motorläufer und dem ersten Greiferschlitten gekoppelt, zur Bewegung des ersten Greiferschlittens mit dem daran angeordneten ersten Greiferfinger in der Führungsschiene. Der zweite Umlenkhebel ist mit dem Motorläufer und dem zweiten Greiferschlitten gekoppelt, zur Bewegung des zweiten Greiferschlittens mit dem daran angeordneten zweiten Greiferfinger in der Führungsschiene.

Die Bewegung der beiden Greiferschlitten mittels der Umlenkhebel erlaubt eine einfache Bauweise des Umlenkmechanismus. Da diese Ausführung des Umlenkmechanismus ohne Zahnräder oder Riemen auskommt, ist sie wartungsarm, zuverlässig und kostengünstig.

Gemäss einem weiteren Aspekt der erfindungsgemässen Greifvorrichtung weist der Umlenkmechanismus einen ersten Umlenkarm auf, der mit dem Motorläufer gekoppelt und um eine erste Schwenkachse herum schwenkbar ist und fest mit dem ersten Greiferfinger verbunden ist, sowie einen zweiten Umlenkarm, der mit dem Motorläufer gekoppelt und um eine zweite Schwenkachse herum schwenkbar ist und fest mit dem zweiten Greiferfinger verbunden ist, zum Bewegen des ersten Greiferfingers und des zweiten Greiferfingers aufeinander zu oder voneinander weg durch Schwenken des ersten Umlenkarms um die erste Schwenkachse und des zweiten Umlenkarms um die zweite Schwenkachse herum.

Der erste und der zweite Umlenkarm sind beispielsweise jeweils an einem Ende mit dem Motorläufer über einen Bolzen gekoppelt und an dem jeweiligen anderen Ende des Umlenkarms ist der jeweilige Greiferfinger fest mit dem Umlenkarm verbunden. An diesem anderen Ende ist auch die jeweilige Schwenkachse (z.B. ein Schwenkbolzen) angeordnet, um die der jeweilige Umlenkarm schwenkbar ist. Durch die Bewegung des Motorläufers in Längsrichtung können dann die beiden Umlenkarme um die jeweilige Schwenkachse geschwenkt werden, so dass die beiden Greiferfinger eine zangenartige Bewegung ausführen. Diese Ausführung kann beispielsweise bei Anwendungen, in denen das Greifobjekt an kleinen, vorbestimmten Angriffspunkten gegriffen werden soll, vorteilhaft sein.

Wie bereits erwähnt, kann bei der erfindungsgemässen Greifvorrichtung der Linearmotor ein tubularer Linearmotor sein, dessen Motorstator einen Innendurchmesser und dessen Motorläufer einen Aussendurchmesser aufweist, der kleiner ist als der Innendurchmesser des Motorstators. Der Stator des (z.B. ebenfalls tubularen) Konstantkraftgebers weist einen Innendurchmesser und der Läufer des Konstantkraftgebers einen Aussendurchmesser auf, der kleiner ist als der Innendurchmesser des Stators. Der Läufer des Konstantkraftgebers und der Motorläufer sind über ein kreiszylindrisches Verbindungselement aus einem magnetisch nicht-leitenden Material miteinander verbunden, dessen Aussendurchmesser kleiner ist als der Innendurchmesser des Stators des Konstantkraftgebers und ebenfalls kleiner als der Innendurchmesser des Motorstators des tubularen Linearmotors, so dass das Verbindungselement sowohl in den Stator des Konstantkraftgebers als auch in den Motorstator hinein bewegbar ist.

Ein solcher Konstantkraftgeber weist im Querschnitt ein kreiszylindrisches Hohlprofil (Innenprofil) des Stators sowie ein entsprechendes kreiszylindrisches Aussenprofil des Läufers auf. Dies sind sehr gängige Formen von Läufer und Stator, die sich einfach und zuverlässig herstellen lassen (wie dies auch bei tubularen Linearmotoren der Fall ist). Das Verbindungselement erlaubt eine platzsparende Bauweise. Insbesondere lässt sich der Motorläufer des tubularen Linearmotors zum Greifen so weit in den Motorstator hineinfahren, dass auch das Verbindungselement in den Motorstator hineingefahren ist.

Gemäss einem weiteren Aspekt der erfindungsgemässen Greifvorrichtung ist das Verbindungselement zwischen dem Motorläufer und dem Flusskonzentrator angeordnet.

Das Verbindungselement kann beispielweise eine durch eine Verlängerung eines (nichtmagnetischen) Läuferrohres gebildet sein, wobei der Hohlraum dieser Verlängerung des Läuferrohrs zwischen dem Flusskonzentrator am Ende des permanentmagnetischen Läuferbereichs des Konstantkraftgebers und dem Ende des Motorläufers des Linearmotors mit Vergussmasse ausgefüllt ist.

Gemäss einem weiteren Aspekt der erfindungsgemässen Greifvorrichtung umfasst die Greifvorrichtung weiterhin
- ein Gehäuse, wobei der Motorstator des Linearmotors fest im Gehäuse angeordnet ist,
- einen Greiferkopf, wobei
   - der erste und der zweite Greiferfinger sowie der Umlenkmechanismus am Greiferkopf
      angeordnet sind, und
   - der Greiferkopf zusammen mit den daran angeordneten ersten und zweiten Greiferfingern sowie dem Umlenkmechanismus relativ zum Gehäuse um die Längsachse des Motorläufers rotierbar ist, sowie
- einen Torquemotor, umfassend
   - einen rotationsfest im Gehäuse angeordneten Torquemotorstator,
   - einen rotationsfest mit dem Greiferkopf verbundenen und relativ zum Torquemotorstator um die Längsachse des Motorläufers rotierbaren Torquemotorrotor, zum Rotieren des Greiferkopfs um die Längsachse des Motorläufers.

Diese Ausführungsvariante erlaubt eine Rotation (Drehung) des Greiferkopfs und somit der beiden Greiferfinger um die Längsachse des Motorläufers. Dies ist insofern von Vorteil als dadurch der Azimutwinkel, unter dem die Greiferfinger bezüglich der Längsachse des Motorläufers angeordnet sind, verstellbar ist. Wenn also ein Greifobjekt Angriffsflächen hat, an dem die Greiferfinger beim Greifvorgang angreifen sollen, diese Angriffsflächen jedoch azimutal anders ausgerichtet sind als die Greiferfinger, können die Greiferfinger auf einfache Weise (nämlich mit Hilfe des Torquemotors) in die für den Greifvorgang optimale azimutale Position gebracht werden. Dazu braucht lediglich die verhältnismässig geringe Masse des Greiferkopfs in die optimale azimutale Position rotiert zu werden (mit Hilfe des Torquemotors), was einfach und schnell möglich ist.

Gemäss einem weiteren Aspekt der erfindungsgemässen Greifvorrichtung umfasst die Greifvorrichtung weiterhin eine Drehkopplung zur Kopplung des Umlenkmechanismus, der an dem um die Längsachse des Motorläufers rotierbaren Greiferkopf angeordnet ist, mit dem Motorläufer, zur Kraftübertragung der in der Längsrichtung wirkenden Kraft vom Motorläufer und/oder vom Läufer des Konstantkraftgebers auf den Umlenkmechanismus.

Eine solche Drehkopplung erlaubt eine Rotation der Greiferfinger um die Längsachse des Motorläufers, ohne dass der Motorläufer relativ zum Motorstator bezüglich der Längsachse rotiert werden muss. Gleichzeitig erlaubt eine derartige Drehkopplung die Kraftübertragung in Längsrichtung vom Motorläufer und dem Läufer des Konstantkraftgebers auf den Umlenkmechanismus und somit letztendlich auf die Greiferfinger.

Weitere vorteilhafte Aspekte und Ausgestaltungen ergeben sich aus der nachfolgenden Beschreibung von Ausführungsbeispielen der erfindungsgemässen Greifvorrichtung oder von Teilen derselben mit Hilfe der schematischen Zeichnungen. Es zeigen:
- Fig. 1: einen Längsschnitt eines ersten Ausführungsbeispiels der erfindungsgemässen Greifvorrichtung, mit den Greiferfingern in einer Greifposition (geschlossene Position);
- Fig. 2: eine perspektivische Ansicht des ersten Ausführungsbeispiels der Greifvorrichtung aus Fig. 1;
- Fig. 3: einen Längsschnitt des ersten Ausführungsbeispiels der Greifvorrichtung aus Fig. 1, mit den Greiferfingern in einer Zwischenposition;
- Fig. 4: einen Längsschnitt des ersten Ausführungsbeispiels der Greifvorrichtung aus Fig. 1, mit den Greiferfingern in vollständig geöffneter Position;
- Fig. 5: einen Konstantkraftgeber mit Flusskonzentrator, mit dem Stator und dem Läufer des Konstantkraftgebers in einer inaktiven Position;
- Fig. 6: einen Konstantkraftgeber mit Flusskonzentrator, mit dem Stator und dem Läufer des Konstantkraftgebers in einer aktiven Position;
- Fig. 7: einen Konstantkraftgeber ohne Flusskonzentrator, mit dem Stator und dem Läufer des Konstantkraftgebers in einer inaktiven Position;
- Fig. 8: einen Querschnitt durch den Konstantkraftgeber entlang der Linie VIII-VIII in Fig. 6;
- Fig. 9: einen Längsschnitt eines zweiten Ausführungsbeispiels der erfindungsgemässen Greifvorrichtung, mit den Greiferfingern in einer Zwischenposition;
- Fig. 10: eine perspektivische Ansicht des zweiten Ausführungsbeispiels der Greifvorrichtung aus Fig. 9;
- Fig. 11: einen Längsschnitt eines dritten Ausführungsbeispiel der erfindungsgemässen Greifvorrichtung, mit den Greiferfingern in einer Greifposition; und
- Fig. 12: eine perspektivische Ansicht des dritten Ausführungsbeispiels der Greifvorrichtung aus Fig. 11.

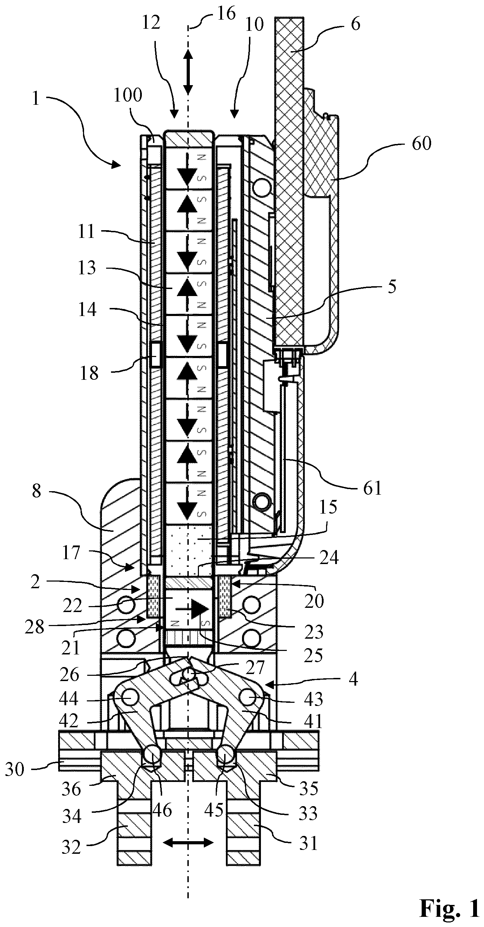

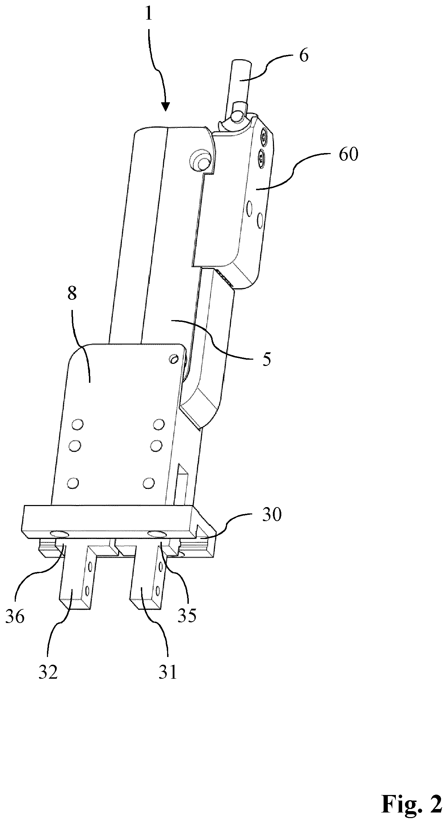

**Fig.** 1 zeigt ein erstes Ausführungsbeispiel der erfindungsgemässen Greifvorrichtung im Längsschnitt und **Fig. 2** eine perspektivische Ansicht des ersten Ausführungsbeispiels der erfindungsgemässen Greifvorrichtung.

Dieses erste Ausführungsbeispiel der erfindungsgemässen Greifvorrichtung umfasst einen tubularen Linearmotor 1 mit einem Motorstator 10 und einem Motorläufer 12 mit einer vertikal verlaufenden Längsachse 16. Der Motorstator 10 des tubularen Linearmotors 1 ist in einem Gehäuse 5 angeordnet. Er umfasst einen Wickelkörper 100 mit einem im Querschnitt kreiszylindrischen Innenprofil und dient als Gleitlagerung für den Motoläufer 12, der im Querschnitt ein kreiszylindrisches Aussenprofil aufweist, wobei der Aussendurchmesser des Motorläufers 12 geringfügig kleiner ist als der Innendurchmesser des Motorstators 10. Der Motorstator 10 umfasst weiterhin Antriebswicklungen 11, die um den Wickelkörper 100 (typischerweise aus einem abriebfesten Kunststoff, z.B. PEEK) des Motorstators 10 herum angeordnet sind. Der Motorläufer 12 weist mehrere Scheibenmagnete 13 auf, die in einem magnetisch nicht-leitenden Läuferrohr 14 (z.B. aus Aluminium oder Edelstahl) des Motorläufers 12 entlang der Längsachse 16 hintereinander angeordnet sind. Gegebenenfalls können zwischen den Scheibenmagneten 13 auch noch Eisenscheiben zur Flussoptimierung eingefügt werden. Die Antriebswicklungen 11 des Motorstators 10 sind über ein mit einer Kabelabdeckung 60 versehenes Kabel 6 und eine Elektronikplatine 61 bestrombar. Durch entsprechende Bestromung dieser Antriebswicklungen 11 ist der Motorläufer 12 relativ zum Motorstator 10 in einer Längsrichtung entlang der Längsachse 16 bewegbar (siehe Doppelpfeil in Fig. 1). Zur Erfassung der Position des Motorläufers 12 relativ zum Motorstator 10 umfasst der tubulare Linearmotor 1 eine Positionssensorik 18.

Die Greifvorrichtung umfasst weiterhin einen Konstantkraftgeber 2. Der Konstantkraftgeber 2 weist einen Stator 20 und einen Läufer 21 auf, dessen ebenfalls vertikal verlaufende Längsachse 26 koinzident ist mit der Längsachse 16 der Motorläufers des tubularen Linearmotors 1. Der Läufer 21 des Konstantkraftgebers 2 ist in einer Längsrichtung entlang der Längsachse 26 relativ zum Stator 20 des Konstantkraftgebers bewegbar. Der Läufer 21 weist einen permanentmagnetischen Läuferbereich 22 auf, der in einer Magnetisierungsrichtung 25 magnetisiert ist, die senkrecht zur Längsachse 26 des Läufers 21 ist. Der Stator 20 weist einen magnetisch leitenden Statorbereich 23 auf. Ähnlich wie bei dem tubularen Linearmotor 1 weist der Stator 20 des Konstantkraftgebers 2 im Querschnitt ein kreiszylindrisches Innenprofil auf und der Läufer 21 des Konstantkraftgebers 2 ein kreiszylindrisches Aussenprofil. Der Stator 20 hat einen Innendurchmesser und der Läufer 21 einen Aussendurchmesser, der kleiner ist als der Innendurchmesser des Stators 20.

Der Läufer 21 des Konstantkraftgebers 2 ist fest mit dem Motorläufer 12 des Linearmotors 1 verbunden. In diesem Ausführungsbeispiel ist der permanentmagnetische Läuferbereich 22 des Konstantkraftgebers 2 mit dem Motorläufer 12 des Linearmotors 1 über ein im Querschnitt kreiszylindrisches Verbindungselement 15 fest verbunden. In dem gezeigten ersten Ausführungsbeispiel ist diese Verbindung derart realisiert, dass der permanentmagnetische Läuferbereich 22 in einer Verlängerung des magnetisch nicht-leitenden Läuferrohrs 14 des Motorläufers 12 des Linearmotors 1 angeordnet ist und das Verbindungselement 15 durch eine Vergussmasse gebildet wird, wobei im gezeigten Ausführungsbeispiel noch ein scheibenförmiger Flusskonzentrator 24 aus einem magnetisch leitenden Material mit hoher Permeabilität zwischen dem permanentmagnetischen Läuferbereich 25 und der Vergussmasse angeordnet ist. Die Funktion des Flusskonzentrators 24 wird weiter unten noch erläutert.

Ebenso ist der Stator 20 des Konstantkraftgebers 2 fest mit dem Motorstator 10 des Linearmotors 1 verbunden, nämlich über ein Gehäuseteil 8, welches fest mit dem Gehäuse 5 verbunden ist, mit dem der Motorstator 10 des Linearmotors 1 seinerseits fest verbunden ist.

Generell ist der Aussendurchmesser des Verbindungselements 15 (zumindest geringfügig) kleiner als der Innendurchmesser des Stators 20 des Konstantkraftgebers 2 und auch (zumindest gerinfügig) kleiner als der Innendurchmesser des Motorstators 10 des Linearmotors 1 (was bei der Ausbildung als Vergussmasse im Läuferrohr 14 automatisch gegeben ist). Entsprechend lässt sich das Verbindungselement 15 sowohl in den Stator 20 des Konstantkraftgebers 2 als auch in den Motorstator 10 des Linearmotors 1 hinein bewegen.

Der Konstantkraftgeber 2 ist am unteren Längsende 17 des Linearmotors 1 angeordnet und ist in Fig. 1 in einer Greifposition (hier: geschlossene Position) gezeigt. Die gezeigte Greifposition ist eine der aktiven Positionen, in denen der permanentmagnetische Läuferbereich 22 und der magnetisch leitende Statorbereich 23 in Längsrichtung lediglich teilweise (also nicht vollständig) überlappend angeordnet sind. Der permanentmagnetische Läuferbereich 22 und der magnetisch leitende Statorbereich 23 des Konstantkraftgebers 2 sind dabei am unteren, dem unteren Längsende 17 des Linearmotors 1 abgewandten, Längsende 28 des Stators 20 des Konstantkraftgebers 2 teilweise überlappend angeordnet. In dieser aktiven Anordnung wird der Läufer 21 durch die konstante Kraft des Konstantkraftgebers 2 nach oben gezogen. In einer aktiven Anordnung ist der Flusskonzentrator 24 in der Längsrichtung vollständig mit dem magnetisch leitender Statorbereich 23 überlappend angeordnet, so dass der vom permanentmagnetischen Läuferbereich 22 erzeugte magnetische Fluss durch den magnetisch leitenden Statorbereich 23 verläuft und der Konstantkraftgeber 2 eine konstante Kraft in Längsrichtung (nach oben) erzeugt.

Die Greifvorrichtung umfasst weiterhin einen ersten Greiferfinger 31 und einen zweiten Greiferfinger 32. Der erste Greiferfinger 31 ist an einem ersten Greiferschlitten 35 angeordnet und der zweite Greiferfinger 32 ist an einem zweiten Greiferschlitten 36 angeordnet. Der erste Greiferschlitten 35 und der zweite Greiferschlitten 36 sind in einer Führungsschiene 30 angeordnet, die in einer Querrichtung (siehe Doppelpfeil) quer zur Längsrichtung (Richtung der Längsachse 16 bzw. 26) angeordnet ist. Der erste Greiferschlitten 35 und der zweite Greiferschlitten 36 sind aufeinander zu und voneinander weg in der Querrichtung entlang der Führungsschiene 30 bewegbar. Entsprechend sind auch der erste Greiferfinger 31 und der zweite Greiferfinger 32, die an den beiden Greiferschlitten 35, 36 angeordnet sind, in Querrichtung aufeinander zu und voneinander weg bewegbar.

Der Motorläufer 12 bzw. der Läufer 21 des Konstantkraftgebers 2 sind am unteren Ende des Läufers 21 mit einem Umlenkmechanismus 4 gekoppelt.

Die Umlenkmechanismus 4 dient zur Bewegung des ersten Greiferschlittens 35 und des zweiten Greiferschlittens 36 aufgrund einer Bewegung des Motorläufers 12 des Linearmotors 1 bzw, des Läufers 21 des Konstantkraftgebers 2 in Längsrichtung relativ zum Motorstator 10 des Linearmotors 1 bzw. zum Stator 20 des Konstantkraftgebers 2. Der Umlenkmechanismus 4 umfasst einen ersten Umlenkhebel 41, der um einen ersten Umlenkbolzen 43 rotierbar gelagert ist sowie einen zweiten Umlenkhebel 42, der um einen zweiten Umlenkbolzen 44 rotierbar gelagert ist. Der erste Umlenkhebel 41 weist an seinem unteren Ende einen ersten Mitnehmer 45 auf, der wiederum in eine erste Aufnahme 33 des ersten Greiferschlittens 35 eingreift. Entsprechend weist der zweite Umlenkhebel 42 an dessen unterem Ende einen zweiten Mitnehmer 46 auf, der wiederum in eine zweite Aufnahme 34 des zweiten Greiferschlittens 36 eingreift.

Der erste Umlenkhebel 41 und der zweite Umlenkhebel 42 sind über einen Bolzen 27 mit dem Läufer 21 des Konstantkraftgebers 2 gekoppelt, der seinerseits fest mit dem Motor-läufer 12 verbunden ist. Eine Bewegung des Motorläufers 12 (und somit des Läufers 21 des Konstantkraftgebers 2) nach oben führt zu gegenläufigen Drehbewegungen des ersten Umlenkhebels 41 und des zweiten Umlenkhebels 42 um den Bolzen 27 herum, so dass der erste Greiferschlitten 35 und der zweite Greiferschlitten 36 in der Querrichtung aufeinander zu bewegt werden. Entsprechend werden auch der erste Greiferfinger 31 und der zweite Greiferfinger 32 aufeinander zu bewegt, bis der erste Greiferfinger 31 und der zweiter Greiferfinger 32 in der Greifposition zum Greifen des Greifobjekts angeordnet sind.

Umgekehrt lassen sich der erste Greiferfinger 31 und der zweite Greiferfinger 32 durch eine Bewegung des Motorläufer 12 relativ zum Motorstator 10 in Längsrichtung nach unten voneinander weg bewegen, bis der erste Greiferfinger 31 und der zweite Greiferfinger 32 in einer geöffneten Position angeordnet sind.

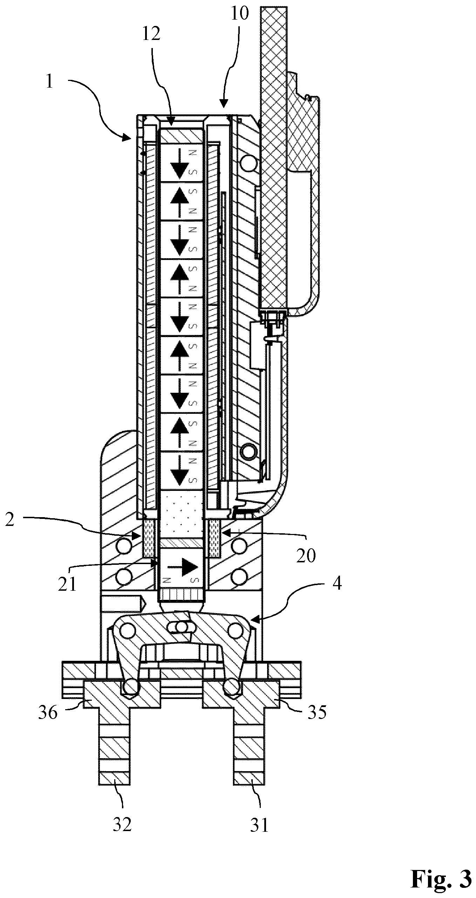

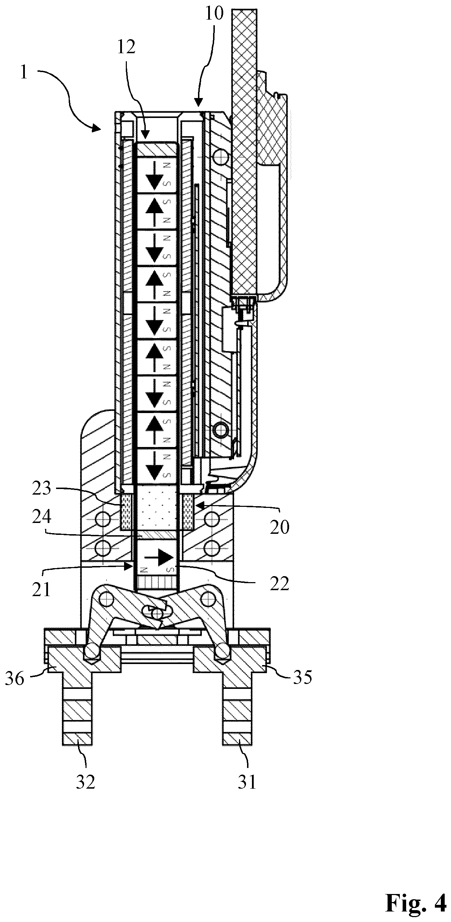

**Fig. 3** zeigt die Greifvorrichtung aus Fig. 1 im Längsschnitt mit den Greiferfingern 31, 32 in einer Zwischenposition, während **Fig. 4** die Greifvorrichtung im Längsschnitt mit den Greiferfingern 31, 32 in einer vollständig geöffneten Position zeigt.

Im Vergleich zur in Fig. 1 gezeigten Anordnung der Greifvorrichtung wurde in der in Fig. 3 gezeigten Anordnung der Motorläufer 12 relativ zum Motorstator 10 nach unten bewegt. Entsprechend wurde auch der mit dem Motorläufer 12 fest verbundene Läufer 21 relativ zum Stator 20 nach unten bewegt. Die Greiferschlitten 35, 36 sowie die daran angeordneten Greiferfinger 31, 32 wurden entsprechend in der Querrichtung voneinander wegbewegt. In der in Fig. 3 gezeigten Anordnung (Zwischenposition) sind der Läufer 21 und der Stator 20 des Konstantkraftgeber 2 immer noch in einer aktiven Position angeordnet. Entsprechend übt der Läufer 21 des Konstantkraftgebers 2 immer noch eine konstante Kraft auf den Umlenkmechanismus 4 aus.

Im Vergleich zur in Fig. 3 gezeigten Anordnung ist in der in Fig. 4 gezeigten Anordnung der Motorläufer 12 relativ zum Motorstator 10 noch weiter nach unten bewegt worden. Entsprechend wurde auch der mit dem Motorläufer 12 fest verbundene Läufer 21 relativ zum Stator 20 weiter nach unten bewegt. Die Greiferschlitten 35, 36 sowie die daran angeordneten Greiferfinger 31, 32 wurden entsprechend in der Querrichtung voneinander weg in die vollständig geöffnete Position der Greiferfinger 31, 32 bewegt. Der Stator 20 und der Läufer 21 des Konstantkraftgebers 2 befinden sich in Fig. 4 in einer inaktiven Position. In dieser inaktiven Position sind der permanentmagnetische Läuferbereich 22 mit dem Flusskonzentrator 24 und der magnetisch leitende Statorbereich 23 in Längsrichtung nicht-überlappend angeordnet. Somit wird vom Konstantkraftgeber 2 keine Kraft in Längsrichtung vom Läufer 21 auf den Umlenkmechanismus 4 erzeugt. Der Flusskonzentrator 24 ist in Längsrichtung ebenfalls nicht-überlappend mit dem magnetisch leitenden Statorbereich 23 angeordnet und verhindert, dass Streuflüsse und damit eine Restkraft zwischen dem magnetisch leitenden Statorbereich 23 und dem Läuferbereich 22 aufgebaut werden.

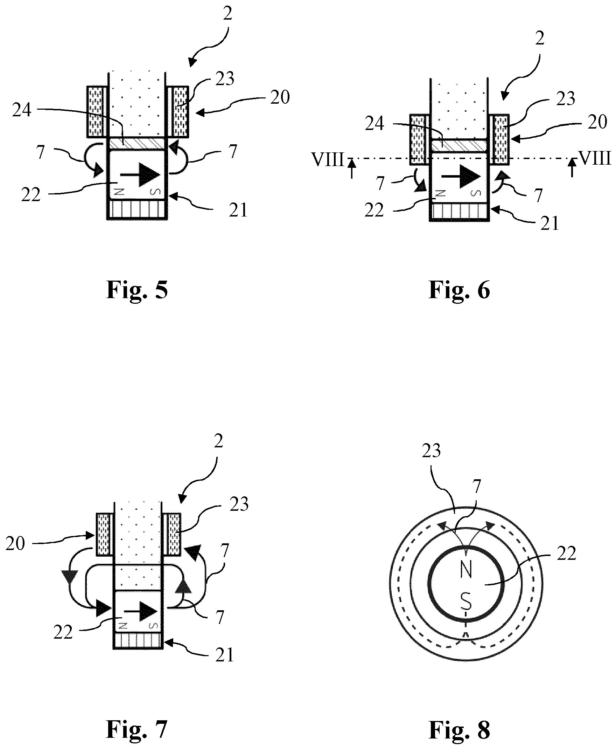

Die Funktionsweise des Flusskonzentrators 24 wird im Folgenden anhand von **Fig. 5** und **Fig. 6** näher erläutert.

In Fig. 5 sind der Stator 20 und der Läufer 21 des Konstantkraftgebers 2 in der inaktiven Position angeordnet. Der permanentmagnetische Läuferbereich 22 ist in Längsrichtung mit dem magnetisch leitenden Statorbereich 23 nicht überlappend angeordnet. Weiterhin ist auch der Flusskonzentrator 24 aus dem Stator 20 nach unten heraus bewegt und ist in Längsrichtung vollständig nicht überlappend mit dem magnetisch leitenden Statorbereich 23 angeordnet. Aufgrund der hohen Permeabilität des Flusskonzentrators 24 wird der magnetische Fluss des vom permanentmagnetischen Läuferbereich 22 erzeugten Magnetfelds (durch die Flusslinie 7 schematisch dargestellt) vollständig durch den Flusskonzentrator 24 geführt und rückgeschlossen. Eine Wechselwirkung zwischen dem permanentmagnetischen Läuferbereich 22 und dem magnetisch leitenden Statorbereich 23 wird somit vermieden, wodurch in der inaktiven Position keine unerwünschten (anziehenden) Kräfte auf den Läufer 21 wirken.

Anders ist dies in der aktiven Position, wie sie in Fig. 6 darrgestellt ist. Hier ist der Flusskonzentrator 24 in Längsrichtung vollständig überlappend mit dem magnetisch leitenden Statorbereich 23 angeordnet. Entsprechend wird der magnetische Fluss durch den magnetisch leitenden Statorbereich 23 rückgeschlossen. Für den Teil des permanentmagnetischen Läuferbereichs 22, der mit dem Stator 20 überlappend angeordnet ist, ist der Verlauf des magnetischen Flusses **Fig. 8** dargestellt (Flusslinie 7 in Fig. 8). Für den ausserhalb des Stators 20 gelegenen Anteil des permanentmagentischen Läuferbereichs 22 erfolgt der Rückschluss so, wie es in Fig. 6 dargestellt ist (Flusslinie 7 in Fig. 6). Auf diese Weise wird eine anziehende Kraft vom Stator 20 auf den Läufer 21 in Längsrichtung (nach oben) ausgeübt.

Im Vergleich dazu ist in **Fig. 7** die Situation ohne Flusskonzentrator 24 dargestellt. Der Stator 20 und der Läufer 21 sind in der inaktiven Position angeordnet, d.h. der permanentmagnetische Läuferbereich 22 und der magnetisch leitende Statorbereich 23 sind in der Längsrichtung nicht-überlappend angeordnet. Ein Grossteil des magnetischen Flusses (siehe Flusslinien 7 in Fig. 7) wird nicht über den magnetisch leitenden Statorbereich 23 rückgeschlossen.

Ein kleinerer Teil des magnetischen Flusses (siehe Flusslinien 7) wird jedoch über den magnetisch leitenden Statorbereich 23 rückgeschlossen. Dadurch entsteht ein Übergangsbereich an Längspositionen des Läufer 21 relativ zum Stator 20, in dem die Kraft zwischen dem permanentmagnetischer Läuferbereich 22 und dem magnetisch leitenden Statorbereich 23 von der vollen Stärke auf Null abfällt. Durch den Flusskonzentrator 24 lässt sich dieser Bereich um 80% bis 90% reduzieren, so dass die konstante Kraft auf den Läufer 21 quasi abrupt einsetzt, wenn sich der permanentmagnetische Läuferbereich 22 und der magnetisch leitende Statorbereich 23 in Längsrichtung teilweise überlappen.

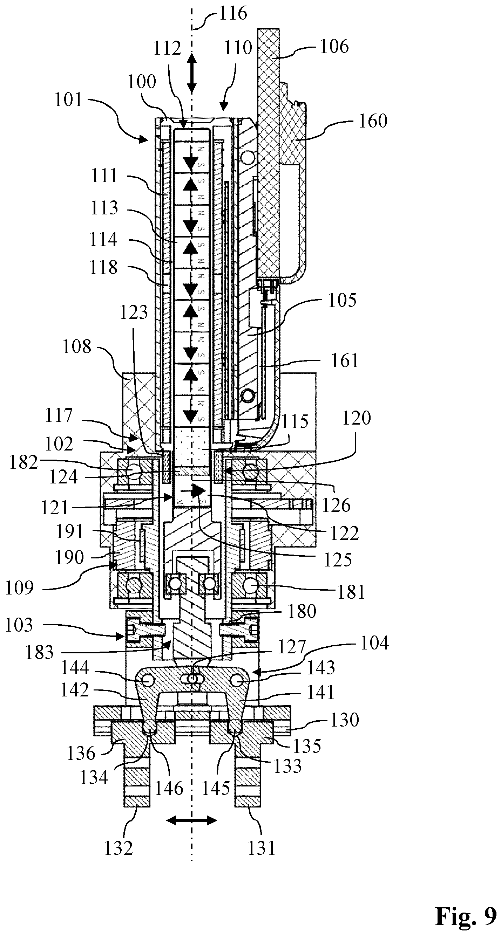

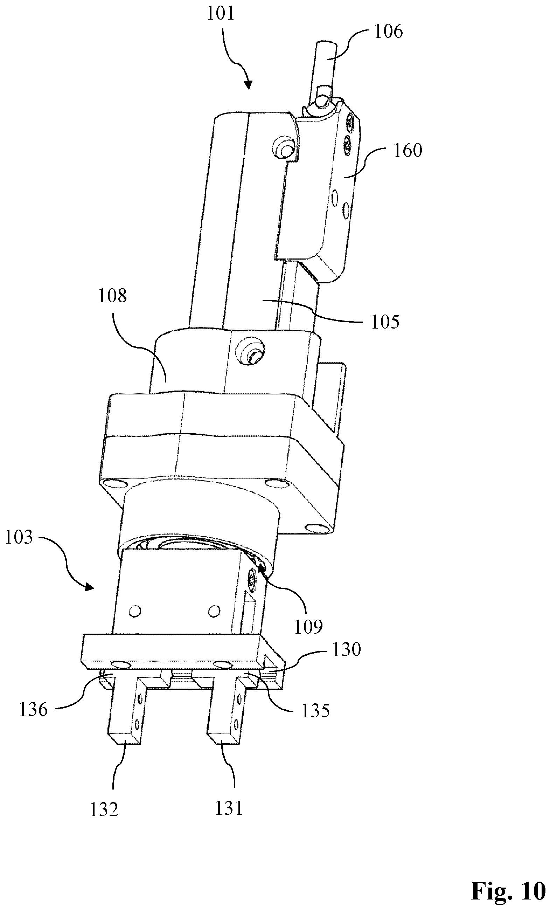

**Fig. 9** zeigt ein zweites Ausführungsbeispiel der erfindungsgemässen Greifvorrichtung im Längsschnitt, und **Fig. 10** eine perspektivische Ansicht des zweiten Ausführungsbeispiels der erfindungsgemässen Greifvorrichtung. Mit Ausnahme des Wickelkörpers 100 sind die übrigen Bezugszeichen für analoge Komponenten beim zweiten Ausführungsbeispiel um einhundert erhöht gegenüber dem ersten Ausführungsbeispiel aus Fig. 1.

Dementsprechend umfasst das zweite Ausführungsbeispiel der erfindungsgemässen Greifvorrichtung einen tubularen Linearmotor 101 mit einem Motorstator 110 und einem Motorläufer 112 mit einer vertikal verlaufenden Längsachse 116. Der Motorstator 110 des tubularen Linearmotors 101 ist in einem Gehäuse 105 angeordnet. Er umfasst einen Wickelkörper 100 mit einem im Querschnitt kreiszylindrischen Innenprofil und dient als Gleitlagerung für den Motorläufer 112, der im Querschnitt ein kreiszylindrisches Aussenprofil aufweist, wobei der Aussendurchmesser des Motorläufers 112 (zumindest geringfügig) kleiner ist als der Innendurchmesser des Motorstators 110. Der Motorstator 110 umfasst weiterhin Antriebswicklungen 111, die um den Wickelkörper 100 (z.B. aus einem abriebfesten Kunststoff wie PEEK) des Motorstators 110 herum angeordnet sind. Der Motorläufer 112 weist mehrere Scheibenmagnete 113 auf, die in einem magnetisch nicht-leitenden Läuferrohr 114 (z.B. aus Aluminium oder Edelstahl) des Motorläufers 112 entlang der Längsachse 116 hintereinander angeordnet sind. Die Antriebswicklungen 111 des Motorstators 110 sind über ein mit einer Kabelabdeckung 160 versehenes Kabel 106 und eine Elektronikplatine 161 bestrombar. Durch entsprechende Bestromung dieser Antriebswicklungen 111 ist der Motorläufer 112 relativ zum Motorstator 110 in einer Längsrichtung entlang der Längsachse 116 bewegbar (siehe Doppelpfeil in Fig. 9). Zur Erfassung der Position des Motorläufers 112 relativ zum Motorstator 110 umfasst der tubulare Linearmotor 101 eine Positionssensorik 118.

Die Greifvorrichtung umfasst weiterhin einen Konstantkraftgeber 102. Der Konstantkraftgeber 102 weist einen Stator 120 und einen Läufer 121 auf, dessen ebenfalls vertikal verlaufende Längsachse 126 koinzident ist mit der Längsachse 116 der Motorläufers 112 des tubularen Linearmotors 101. Der Läufer 121 des Konstantkraftgebers 102 ist in einer Längsrichtung entlang der Längsachse 126 relativ zum Stator 120 des Konstantkraftgebers 102 bewegbar. Der Läufer 121 weist einen permanentmagnetischen Läuferbereich 122 auf, der in einer Magnetisierungsrichtung 125 magnetisiert ist, die senkrecht zur Längsachse 126 des Läufers 121 ist. Der Stator 120 weist einen magnetisch leitenden Statorbereich 123 auf. Ähnlich wie bei dem tubularen Linearmotor 101 weist der Stator 120 des Konstantkraftgebers 102 im Querschnitt ein kreiszylindrisches Innenprofil auf und der Läufer 121 des Konstantkraftgebers 102 ein kreiszylindrisches Aussenprofil. Der Stator 120 hat einen Innendurchmesser und der Läufer 121 einen Aussendurchmesser, der kleiner ist als der Innendurchmesser des Stators 120.

Der Läufer 121 des Konstantkraftgebers 102 ist fest mit dem Motorläufer 112 des Linearmotors 101 verbunden. In diesem Ausführungsbeispiel ist der permanentmagnetische Läuferbereich 122 des Konstantkraftgebers 102 mit dem Motorläufer 112 des Linearmotors 101 über ein im Querschnitt kreiszylindrisches Verbindungselement 115 fest verbunden. In dem gezeigten zweiten Ausführungsbeispiel ist diese Verbindung derart realisiert, dass der permanentmagnetische Läuferbereich 122 in einer Verlängerung des magnetisch nicht-leitenden Läuferrohrs 114 des Motorläufers 112 des Linearmotors 101 angeordnet ist und das Verbindungselement 115 durch eine Vergussmasse gebildet wird, wobei im gezeigten Ausführungsbeispiel noch ein scheibenförmiger Flusskonzentrator 124 aus einem magnetisch leitenden Material mit hoher Permeabilität zwischen dem permanentmagnetischen Läuferbereich 125 und der Vergussmasse angeordnet ist. Die Funktion des Flusskonzentrators 124 ist prinzipiell dieselbe wie beim Flusskonzentrator 24 des ersten Ausführungsbeispiels und ist anhand von Fig. 5 bis Fig. 8 bereits oben erläutert.

Ebenso ist der Stator 120 des Konstantkraftgebers 102 fest mit dem Motorstator 110 des Linearmotors 101 verbunden, nämlich über ein Gehäuseteil 108, welches fest mit dem Gehäuse 105 verbunden ist, mit dem auch der Motorstator 110 des Linearmotors 101 fest verbunden ist.

Generell ist der Aussendurchmesser des Verbindungselements 115 (zumindest geringfügig) kleiner als der Innendurchmesser des Stators 120 des Konstantkraftgebers 102 und auch (zumindest geringfügig) kleiner als der Innendurchmesser des Motorstators 110 des Linearmotors 101 (was bei der Ausbildung als Vergussmasse im Läuferrohr 114 automatisch gegeben ist). Entsprechend lässt sich das Verbindungselement 115 sowohl in den Stator 120 des Konstantkraft-gebers 102 als auch in den Motorstator 110 des Linearmotors 101 hinein bewegen.

Der Konstantkraftgeber 102 ist am unteren Längsende 117 des Linearmotors 101 angeordnet. Der permanentmagnetische Läuferbereich 122 und der magnetisch leitende Statorbereich 123 des Konstantkraftgebers 102 sind dabei am unteren, dem unteren Längsende 117 des Linearmotors 101 abgewandten, Längsende 128 des Stators 120 des Konstantkraftgebers 102 teilweise überlappend angeordnet (d.h. in einer aktiven Anordnung). In dieser aktiven Anordnung wird der Läufer 121 durch die konstante Kraft des Konstantkraftgebers 102 nach oben gezogen.

Die Greifvorrichtung umfasst weiterhin einen ersten Greiferfinger 131 und einen zweiten Greiferfinger 132. Der erste Greiferfinger 131 ist an einem ersten Greiferschlitten 135 angeordnet und der zweite Greiferfinger 132 ist an einem zweiten Greiferschlitten 136 angeordnet. Der erste Greiferschlitten 135 und der zweite Greiferschlitten 136 sind in einer Führungsschiene 130 angeordnet, die in einer Querrichtung (siehe Doppelpfeil) quer zur Längsrichtung (Richtung der Längsachse 116 bzw. 126) angeordnet ist. Der erste Greiferschlitten 135 und der zweite Greiferschlitten 136 sind aufeinander zu und voneinander weg in der Querrichtung entlang der Führungsschiene 130 bewegbar.

Entsprechend sind auch der erste Greiferfinger 131 und der zweite Greiferfinger 132, die an den beiden Greiferschlitten 135, 136 angeordnet sind, in Querrichtung aufeinander zu und voneinander weg bewegbar.

Der Motorläufer 112 bzw. der Läufer 121 des Konstantkraftgebers 102 sind am unteren Ende des Läufers 121 mit einem Umlenkmechanismus 104 gekoppelt. Der Umlenkmechanismus umfasst einen ersten Umlenkhebel 141, der um einen ersten Umlenkbolzen 143 herum rotierbar gelagert ist, sowie einen zweiten Umlenkhebel 142, der um einen zweiten Umlenkbolzen 144 herum rotierbar gelagert ist. Der erste Umlenkhebel 141 weist an seinem unteren Ende einen ersten Mitnehmer 145 auf, der wiederum in eine erste Aufnahme 133 des ersten Greiferschlittens 135 eingreift. Entsprechend weist der zweite Umlenkhebel 142 an dessen unterem Ende einen zweiten Mitnehmer 146 auf, der wiederum in eine zweite Aufnahme 134 des zweiten Greiferschlittens 136 eingreift

Bis hierhin ist das zweite Ausführungsbeispiel der erfindungsmässen Greifvorrichtung gemäss Fig. 9 und Fig. 10 weitgehend analog zum ersten Ausführungsbeispiel ausgebildet, und auch der der Umlenkmechanismus 104 selbst ist grundsätzlich analog zum Umlenkmechanismus des ersten Ausführungsbeispiels ausgebildet. Eine erneute Beschreibung der Funktionsweise der analogen Komponenten des zweiten Ausführungsbeispiels ist somit nicht erforderlich. Hingegen ist beim zweiten Ausführungsbeispiel die Art der Kopplung des Umlenkmechanismus 104 mit dem Läufer 121 des Konstantkraftgebers 102 signifikant anders.

Das liegt daran, dass beim zweiten Ausführungsbeispiel der Greiferkopf 103 als Ganzes (einschliesslich der zuvor beschriebenen ersten und zweiten Greiferfinger 131, 132, einschliesslich der Führungsschiene 130 und der darin geführten ersten und zweiten Greiferschlitten 135, 136, und auch einschliesslich des Umlenkmechanismus 104) relativ zur zum Motorläufer 112 des Linearmotors 101 um dessen Längsachse 116 herum (bzw. relativ zum Läufer 121 des Konstantkraftgebers 102 um dessen Längsachse 126 herum) gedreht werden kann.

Hierzu weist das zweite Ausführungsbeispiel der erfindungsgemässen Greifvorrichtung einen Torquemotor 109 auf, dessen Torquemotorstator 190 fest mit dem Gehäuse 108 verbunden ist, mit welchem auch der Stator 120 des Konstantkraftgebers 102 und der Stator 110 (bzw. dessen Gehäuse 105) des Linearmotors 101 fest verbunden ist. Weiterhin weist der Torquemotor 109 einen Torquemotorrotor 191 auf, der fest auf einer Drehwelle 180 (Hohlwelle) angeordnet ist. Der Greiferkopf 103 ist mit dieser Drehwelle 180 fest verbunden (z.B. verschraubt). Die Drehwelle 180 (Hohlwelle) ihrerseits ist gegenüber dem Gehäuse 108 mittels zweier Kugellager 181, 182 drehbar gelagert. Der Greiferkopf 103 ist mit dem Motorläufer 112 des Linearmotors 101 bzw. dem Läufer 121 des Konstantkraftgebers 102 mittels einer Drehkopplung 183 (Wellenstück mit einem Kugellager) drehbar gekoppelt.

Wird der Torquemotorrotor 191 des Torquemotors 190 in Rotation versetzt, dreht sich die Drehwelle 180 (Hohlwelle) mit dem Torquemotorrotor 191 des Torquemotors 190 mit, wodurch auch der fest mit dieser Drehwelle 180 verbundene Greiferkopf 103 gedreht wird, während sowohl der Motorläufer 112 des Linearmotors 101 als auch der Läufer 121 des Konstantkraftgebers 102 (aufgrund der Kopplung des Greiferkopfs 103 mittels der Drehkopplung 183) nicht mitgedreht werden.

Der erste Umlenkhebel 141 und der zweite Umlenkhebel 142 des Umlenkmechanismus 104 sind über einen Bolzen 127 mit der Drehkopplung 183 (Wellenstück) gekoppelt. In Bezug auf eine Bewegung in Richtung der Längsachse 116 des Linearmotors 101 bzw. in Richtung der Längsachse 126 des Konstantkraftgebers 102 ist die Drehkopplung 183 fest mit dem Läufer 121 des Konstantkraftgebers 102 verbunden, der seinerseits fest mit dem Motor-läufer 112 des Linearmotors 101 verbunden ist.

Bezüglich der Bewegung des ersten Umlenkhebels 141 und des zweiten Umlenkhebels 142 des Umlenkmechanismus 104 durch eine Bewegung des Motorläufers 101 des Linearmotors 101 entlang der Längsachse 116 und die hieraus resultierende Bewegung des ersten Greiferschlittens 135 bzw. des ersten Greiferfingers 131 und des zweiten Greiferschlittens 136 bzw. des zweiten Greiferfingers 132 aufeinander zu bzw. voneinander weg (Doppelpfeil in Fig. 9) wird auf die diesbezügliche Beschreibung des ersten Ausführungsbeispiels der erfindungsgemässen Greifvorrichtung verwiesen.

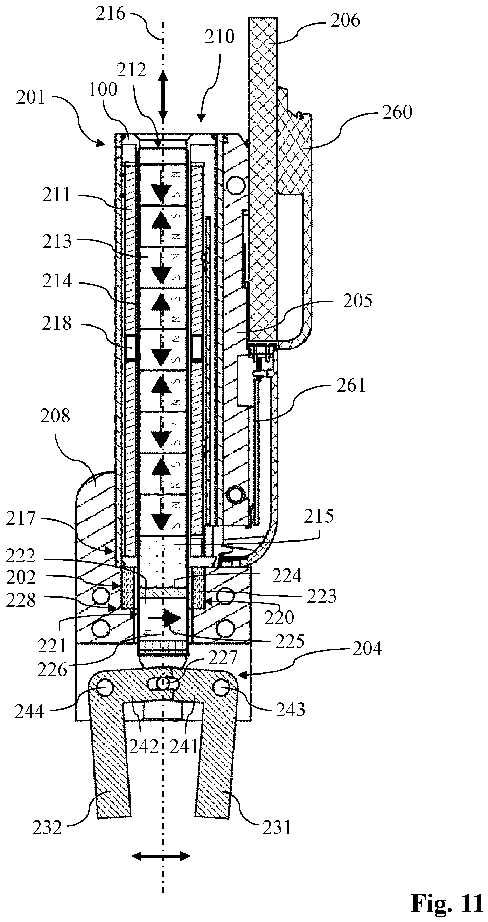

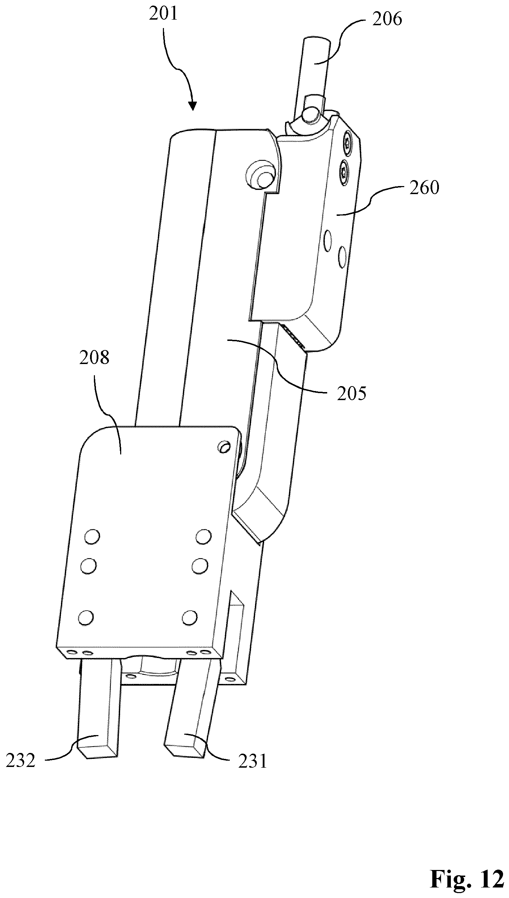

**Fig. 11** zeigt ein drittes Ausführungsbeispiel der erfindungsgemässen Greifvorrichtung im Längsschnitt und **Fig. 12** eine perspektivische Ansicht des dritten Ausführungsbeispiels.

Mit Ausnahme der Art und Weise, wie der Umlenkmechanismus ausgebildet ist (dieser wird weiter unten noch näher erläutert) und wie demzufolge die Greifbewegung des ersten und des zweiten Greiferfingers erfolgt (hier: ähnlich wie bei einer Zange), ist das dritte Ausführungsbeispiel analog dem ersten Ausführungsbeispiel ausgebildet. Die Bezugsziffern sind dementsprechend beim dritten Ausführungsbeispiel um zweihundert erhöht gegenüber den Bezugsziffern des ersten Ausführungsbeispiels.

Demzufolge umfasst das dritte Ausführungsbeispiel der erfindungsgemässen Greifvorrichtung einen tubularen Linearmotor 201 mit einem Motorstator 210 und einem Motorläufer 212 mit einer vertikal verlaufenden Längsachse 216. Der Motorstator 210 des tubularen Linearmotors 201 ist in einem Gehäuse 205 angeordnet. Er umfasst einen Wickelkörper 100 mit einem im Querschnitt kreiszylindrischen Innenprofil und dient als Gleitlagerung für den Motorläufer 212, der im Querschnitt ein kreiszylindrisches Aussenprofil aufweist, wobei der Aussendurchmesser des Motorläufers 212 gleich ist (bzw. geringfügig kleiner) wie der Innendurchmesser des Motorstators 210. Der Motorstator 210 umfasst weiterhin Antriebswicklungen 211, die um den Wickelkörper 100 (z.B. aus einem abriebfesten Kunststoff wie PEEK) des Motorstators 210 herum angeordnet sind. Der Motorläufer 212 weist mehrere Scheibenmagnete 213 auf, die ein einem magnetisch nicht-leitenden Läuferrohr 214 (z.B. aus Aluminium oder Edelstahl) des Motorläufers 212 entlang der Längsachse 216 hintereinander angeordnet sind. Die Antriebswicklungen 211 des Motorstators 210 sind über ein mit einer Kabelabdeckung 260 versehenes Kabel 206 und eine Elektronikplatine 261 bestrombar. Durch entsprechende Bestromung dieser Antriebswicklungen 211 ist der Motorläufer 212 relativ zum Motorstator 210 in einer Längsrichtung entlang der Längsachse 216 bewegbar (siehe Doppelpfeil in Fig. 11). Zur Erfassung der Position des Motorläufers 212 relativ zum Motorstator 210 umfasst der tubulare Linearmotor 201 eine Positionssensorik 218.

Die Greifvorrichtung umfasst weiterhin einen Konstantkraftgeber 202. Der Konstantkraftgeber 202 weist einen Stator 220 und einen Läufer 221 auf, dessen ebenfalls vertikal verlaufende Längsachse 226 koinzident ist mit der Längsachse 216 der Motorläufers des tubularen Linearmotors 201. Der Läufer 221 des Konstantkraftgebers 202 ist in einer Längsrichtung entlang der Längsachse 226 relativ zum Stator 220 des Konstantkraftgebers 202 bewegbar. Der Läufer 221 weist einen permanentmagnetischen Läuferbereich 222 auf, der in einer Magnetisierungsrichtung 225 magnetisiert ist, die senkrecht zur Längsachse 226 des Läufers 221 ist. Der Stator 220 weist einen magnetisch leitenden Statorbereich 223 auf. Ähnlich wie bei dem tubularen Linearmotor 201 weist der Stator 220 des Konstantkraftgebers 202 im Querschnitt ein kreiszylindrisches Innenprofil auf und der Läufer 221 des Konstantkraftgebers 202 ein kreiszylindrisches Aussenprofil. Der Stator 220 hat einen Innendurchmesser und der Läufer 221 einen Aussendurchmesser, der kleiner ist als der Innendurchmesser des Stators 220.

Der Läufer 221 des Konstantkraftgebers 202 ist fest mit dem Motorläufer 212 des Linearmotors 201 verbunden. In diesem Ausführungsbeispiel ist der permanentmagnetische Läuferbereich 222 des Konstantkraftgebers 202 mit dem Motorläufer 212 des Linearmotors 201 über ein im Querschnitt kreiszylindrisches Verbindungselement 215 fest verbunden. In dem gezeigten dritten Ausführungsbeispiel ist diese Verbindung derart realisiert, dass der permanentmagnetische Läuferbereich 222 in einer Verlängerung des magnetisch nicht-leitenden Läuferrohrs 214 des Motorläufers 212 des Linearmotors 201 angeordnet ist und das Verbindungselement 215 durch eine Vergussmasse gebildet wird, wobei im gezeigten Ausführungsbeispiel noch ein scheibenförmiger Flusskonzentrator 224 aus einem magnetisch leitenden Material mit hoher Permeabilität zwischen dem permanentmagnetischen Läuferbereich 225 und der Vergussmasse angeordnet ist. Die Funktion des Flusskonzentrators 224 ist bereits weiter oben erläutert, sodass auf diese Erläuterung verwiesen wird.

Ebenso ist der Stator 220 des Konstantkraftgebers 202 fest mit dem Motorstator 210 des Linearmotors 201 verbunden, nämlich über ein Gehäuse 208, welches fest mit dem Gehäuse 205 verbunden ist, mit dem der Motorstator 210 des Linearmotors 201 seinerseits fest verbunden ist.

Generell ist der Aussendurchmesser des Verbindungselements 215 (zumindest geringfügig) kleiner als der Innendurchmesser des Stators 220 des Konstantkraftgebers 202 und auch gleich oder kleiner als der Innendurchmesser des Motorstators 210 des Linearmotors 201 (was bei der Ausbildung als Vergussmasse im Läuferrohr 214 automatisch gegeben ist). Entsprechend lässt sich das Verbindungselement 215 sowohl in den Stator 220 des Konstantkraft-gebers 202 als auch in den Motorstator 210 des Linearmotors 201 hinein bewegen.

Der Konstantkraftgeber 202 ist am unteren Längsende 217 des Linearmotors 201 angeordnet und ist in Fig. 11 in einer Zwischenposition (analog zu Fig. 3) gezeigt. Die Zwischenposition ist eine der aktiven Positionen, in denen der permanentmagnetische Läuferbereich 222 und der magnetisch leitende Statorbereich 223 in Längsrichtung lediglich teilweise (also nicht vollständig) überlappend angeordnet sind. Der permanentmagnetische Läuferbereich 222 und der magnetisch leitende Statorbereich 223 des Konstantkraftgebers 202 sind dabei am unteren, dem unteren Längsende 217 des Linearmotors 201 abgewandten, Längsende 228 des Stators 220 des Konstantkraftgebers 202 teilweise überlappend angeordnet. In dieser aktiven Anordnung wird der Läufer 221 durch die konstante Kraft des Konstantkraftgebers 202 nach oben gezogen. In einer aktiven Anordnung ist der Flusskonzentrator 224 in der Längsrichtung vollständig mit dem magnetisch leitender Statorbereich 223 überlappend angeordnet, so dass der vom permanentmagnetischen Läuferbereich 222 erzeugte magnetische Fluss durch den magnetisch leitenden Statorbereich 223 verläuft und der Konstantkraftgeber 2 eine konstante Kraft in Längsrichtung (nach oben) erzeugt.

Das dritte Ausführungsbeispiel der Greifvorrichtung umfasst weiterhin einen ersten Greiferfinger 231 und einen zweiten Greiferfinger 232. Der Motorläufer 212 des Linearmotors 201 bzw. der Läufer 221 des Konstantkraftgebers 202 sind am unteren Ende des Läufers 221 mit einem Umlenkmechanismus 204 gekoppelt. Der Umlenkmechanismus 204 dient zur Bewegung des ersten Greiferfingers 231 und des zweiten Greiferfingers 232 aufgrund einer Bewegung des Motorläufers 212 in Längsrichtung relativ zum Motorstator 210.

Anders als beim ersten Ausführungsbeispiel umfasst der Umlenkmechanismus 204 beim dritten Ausführungsbeispiel eine ersten Umlenkarm 241, der um einen ersten Schwenkbolzen 243 herum (der eine erste Schwenkachse definiert) schwenkbar ist, sowie einen zweiten Umlenkarm 242, der um einen zweiten Schwenkbolzen 244 herum (der eine zweite Schwenkachse definiert) schwenkbar ist. Der erste Greiferfinger 231 ist fest mit dem ersten Umlenkarm 241 verbunden und der zweite Greiferfinger 232 ist fest mit dem zweiten Umlenkarm 242 verbunden.

Weiterhin sind der erste Umlenkarm 241 und der zweite Umlenkarm 242 über einen (gemeinsamen) Bolzen 227 mit dem Läufer 221 des Konstantkraftgebers 202 verbunden, der wiederum fest mit dem Motorläufer 212 des Linearmotors 201 verbunden ist, wodurch der Umlenkmechanismus 204 mit dem Motorläufer 212 des Linearmotors 201 gekoppelt ist. Eine Bewegung des Motorläufers 212 des Linearmotors 201 (und somit des Läufers 221 des Konstantkraftgebers 202) nach oben führt zu gegenläufigen Schwenkbewegungen des ersten Umlenkarms 241 um den ersten Schwenkbolzen 243 herum und des zweiten Umlenkarms 242 um den zweiten Schwenkbolzen 244, so dass der erste Greiferfinger 231 und der zweite Greiferfinger 232 ähnlich wie die Greifbacken einer Zange aufeinander zu bewegt werden. Entsprechend lassen sich der erste Greiferfinger 231 und der zweite Greiferfinger 232 durch eine Bewegung des Motorläufer 212 relativ zum Motorstator 210 in Längsrichtung nach unten voneinander weg bewegen, bis der erste Greiferfinger 231 und der zweite Greiferfinger 232 in einer vollständig geöffneten Position angeordnet sind. Der in Fig. 11 dargestellte Doppelpfeil soll somit nur schematisch die Bewegung des ersten Greiferfingers 231 und des zweiten Greiferingers 232 aufeinander zu bzw. voneinander weg andeuten, da sich der jeweilige Greiferfinger streng genommen auf einer Kreisbahn um den jeweiligen Schwenkbolzen herum bewegt.

Die erfindungsgemässe Greifvorrichtung ist vorstehend anhand von Ausführungsbeispielen erläutert worden. Die Erfindung ist jedoch nicht auf diese Ausführungsbeispiele beschränkt, sondern soll auch Ausführungen umfassen, die von der technischen Lehre der Erfindung Gebrauch machen. Der Schutzbereich wird daher durch die nachfolgenden Patentansprüche bestimmt.

## Patentansprüche

1. Greifvorrichtung, umfassend
- einen elektrischen Linearmotor (1; 101; 201), insbesondere einen tubularen elektrischen Linearmotor, mit einem Motorstator (10; 110; 210) und einem Motorläufer (12; 112; 212), der relativ zum Motorstator (10; 110; 210) in einer Längsrichtung entlang einer Längsachse (16; 116; 216) des Motorläufers (12; 112; 212) bewegbar ist,
- einen ersten Greiferfinger (31; 131; 132) und einen zweiten Greiferfinger (32; 132; 232), wobei der erste Greiferfinger und der zweite Greiferfinger quer zur Längsrichtung relativ zueinander bewegbar sind, und zwar aufeinander zu oder voneinander weg,
- einen Umlenkmechanismus (4, 104; 204), der mit dem Motorläufer sowie mit mindestens einem der ersten und zweiten Greiferfinger gekoppelt ist, zur Bewegung des mindestens einen der ersten und zweiten Greiferfinger quer zur Längsrichtung aufgrund einer Bewegung des Motorläufers relativ zum Motorstator entlang der Längsachse des Motorläufers (12; 112; 212), und
- einen Konstantkraftgeber (2; 102; 202), mit einem Stator (20; 120; 220) und einem Läufer (21; 121; 221), der relativ zum Stator (20; 120, 220) in der Längsrichtung bewegbar ist, und zwar entlang einer Längsachse des Läufers;
wobei
- der Läufer (21; 121; 221) fest mit dem Motorläufer (12; 112; 212) verbunden ist und der Stator (20; 120; 220) fest mit dem Motorstator (10; 110; 210) verbunden ist,
- der Stator (20; 120; 220) einen magnetisch leitenden oder permanentmagnetischen Statorbereich (23; 123; 223) und der Läufer (21; 121; 221) einen permanentmagnetischen oder magnetisch leitenden Läuferbereich (22; 122; 222) aufweist, und zumindest der Statorbereich (23; 123; 223) oder der Läuferbereich (22; 122; 222) permanentmagnetisch ausgebildet und in einer Magnetisierungsrichtung (25; 125; 225) magnetisiert ist, die senkrecht zur Längsrichtung ist,
und wobei der Konstantkraftgeber relativ zum Motorstator und zum Motorläufer derart angeordnet ist, dass
- in einer Greifposition des ersten (31; 131; 231) und des zweiten Greiferfingers (32; 132; 232) relativ zueinander der Läufer (21; 121; 221) und der Stator (20; 120; 220) in einer aktiven Position angeordnet sind, in der der permanentmagnetische oder magnetisch leitende Läuferbereich (22; 122; 222) und der magnetisch leitende oder permanentmagnetische Statorbereich (23; 123; 223) in Längsrichtung lediglich teilweise überlappend angeordnet sind, zur Erzeugung einer vom Läufer (21; 121; 221) auf den Umlenkmechanismus (4; 104; 204) in Längsrichtung wirkenden Kraft zur Erhaltung der Greifposition, und
- in einer geöffneten Position des ersten (31; 131; 231) und des zweiten Greiferfingers (32; 132; 232) relativ zueinander der Läufer (21; 121; 221) und der Stator (20; 120; 220) in einer inaktiven Position angeordnet sind, in welcher der permanentmagnetische oder magnetisch leitende Läuferbereich (22; 122; 222) und der magnetisch leitende oder permanentmagnetische Statorbereich (23; 123; 223) in Längsrichtung nicht-überlappend angeordnet sind, ohne Erzeugung einer vom Läufer (22; 122; 222) auf den Umlenkmechanismus (4; 104; 204) wirkenden Kraft.

2. Greifvorrichtung gemäss Anspruch 1, wobei der Umlenkmechanismus (4; 104; 204) sowohl mit dem ersten Greiferfinger (31; 131; 231) als auch mit dem zweiten Greiferfinger (32; 132; 232) gekoppelt ist, zur Bewegung sowohl des ersten Greiferfingers (31; 131; 231) als auch des zweiten Greiferfingers (32; 132; 232) quer zur Längsrichtung aufgrund einer Bewegung des Motorläufers (12; 112; 212) relativ zum Motorstator (10; 110; 210) entlang der Längsachse des Motorläufers (12; 112; 212).

3. Greifvorrichtung gemäss einem der vorangehenden Ansprüche, wobei der Konstantkraftgeber (2; 102; 202) entweder an einem ersten Längsende (17; 117; 217) des Linearmotors (1; 101; 201) angeordnet ist, an dem auch der erste Greiferfinger (31; 131; 231) und der zweite Greiferfinger (32; 132; 232) angeordnet sind, oder an einem zweiten Längsende des Linearmotors (1; 101; 201) gegenüber dem ersten Längsende (17; 117; 217).

4. Greifvorrichtung gemäss Anspruch 3, wobei der Konstantkraftgeber (2; 102; 202) an dem ersten Längsende (17; 117; 217) des Linearmotors (1; 101; 201) angeordnet ist, an dem auch der erste Greiferfinger (31; 131; 231) und der zweite Greiferfinger (32; 132; 232) angeordnet sind, und wobei in der inaktiven Position des Läufers (21; 121; 221) der permanentmagnetische oder magnetisch leitende Läuferbereich (22; 122; 222) an einem dem ersten Längsende des Linearmotors abgewandten Längsende (28; 128; 228) des Stators (20; 120; 220) nicht-überlappend mit dem magnetisch leitenden oder permanentmagnetischen Statorbereich (23; 123; 223) angeordnet ist.

5. Greifvorrichtung gemäss Anspruch 4, wobei der Läuferbereich (22; 122; 222) permanentmagnetisch ausgebildet und in einer Magnetisierungsrichtung (25; 125; 225) magnetisiert ist, die senkrecht zur Längsrichtung ist, und wobei der Statorbereich (23; 123; 223) magnetisch leitend ausgebildet ist.

6. Greifvorrichtung gemäss Anspruch 5, wobei der Konstantkraftgeber (2; 102; 202) weiterhin einen Flusskonzentrator (24; 124; 224) aus einem magnetisch leitenden Material umfasst, der an einem Längsende des permanentmagnetischen Läuferbereichs (22; 122; 222) des Läufers (21; 121; 221) des Konstantkraftgebers (2; 102; 202) angeordnet ist, welches dem ersten Längsende (17; 117; 217) des Linearmotors (1; 101; 201) zugewandt ist,
und wobei
- in der aktiven Position des Stators (20; 120; 220) und des Läufers (21; 121; 221) des Konstantkraftgebers der Flusskonzentrator (24; 124; 224) mit dem magnetisch leitenden Statorbereich (23; 123; 223) des Stators des Konstantkraftgebers in der Längsrichtung vollständig überlappend angeordnet ist,
- in der inaktiven Position des Stators (20; 120; 220) und des Läufers (21; 121; 221) des Konstantkraftgebers der Flusskonzentrator (24; 124; 224) an einem dem ersten Längsende des Linearmotors abgewandten Längsende (28; 128; 228) des Stators in der Längsrichtung nicht-überlappend mit dem magnetisch leitenden Statorbereich (23; 123; 223) des Stators angeordnet ist.

7. Greifvorrichtung nach Anspruch 6, wobei die Längsachse (16; 116; 216) des Motorläufers (12; 112; 212) vertikal angeordnet und das erste Längsende (17; 117; 217) des Linearmotors (1; 101; 201) das untere Ende des Linearmotors ist, an welchem der Konstantkraftgeber (2; 102; 212) und auch die Greiferfinger (31; 131; 231; 32; 132; 232) angeordnet sind, und wobei die Längsachse (26; 126; 262) des Läufers (21; 121; 221) des Konstantkraftgebers ebenfalls vertikal angeordnet ist, und das dem ersten Längsende (17; 117; 217) des Linearmotors abgewandte Längsende (28; 128; 228) des Stators (20; 120; 220) des Konstantkraftgebers das untere Ende des Stators (20; 120; 220) ist.

8. Greifvorrichtung gemäss einem der vorangehenden Ansprüche, wobei die Längsachse (16; 116; 216) des Motorläufers (10; 110; 210) des Linearmotors (1; 101; 201) und die Längsachse (26; 126; 226) des Läufers (21; 121; 221) des Konstantkraftgebers (2; 102; 202) koinzident sind.

9. Greifvorrichtung gemäss Anspruch 8, wobei der erste Greiferfinger (31; 131) an einem ersten Greiferschlitten (35; 135) und der zweite Greiferfinger (32; 132) an einem zweiten Greiferschlitten (36; 136) angeordnet ist, wobei der erste Greiferschlitten (35; 135) und der zweite Greiferschlitten (36; 136) in einer Führungsschiene (30; 130) bewegbar angeordnet sind, die in einer Querrichtung quer zur Längsrichtung angeordnet ist, zur Bewegung des ersten Geiferfingers (31; 131) und des zweiten Greiferfingers (32; 132) aufeinander zu oder voneinander weg in der Querrichtung durch Bewegung des ersten Greiferschlittens (35; 135) und des zweiten Greiferschlittens (36; 136) aufeinander zu oder voneinander weg in der Führungsschiene (30; 130).

10. Greifvorrichtung gemäss Anspruch 9, wobei der Umlenkmechanismus (4; 104) einen ersten Umlenkhebel (41; 141) und einen zweiten Umlenkhebel (42; 142) umfasst, wobei der erste Umlenkhebel (41; 141) mit dem Motorläufer (12; 112) und dem ersten Greiferschlitten (35; 135) gekoppelt ist, zur Bewegung des ersten Greiferschlittens (35; 135) mit dem daran angeordneten ersten Greiferfinger (31; 131) in der Führungsschiene (30; 130), und wobei der zweite Umlenkhebel (42; 142) mit dem Motorläufer (12; 112) und dem zweiten Greiferschlitten (36; 136) gekoppelt ist, zur Bewegung des zweiten Greiferschlittens (36; 136) mit dem daran angeordneten zweiten Greiferfinger (31; 131) in der Führungsschiene (30; 130).

11. Greifvorrichtung gemäss Anspruch 8, wobei der Umlenkmechanismus (204) einen ersten Umlenkarm (241) aufweist, der mit dem Motorläufer (212) gekoppelt und um eine erste Schwenkachse herum schwenkbar ist und fest mit dem ersten Greiferfinger (231) verbunden ist, und wobei der Umlenkmechanismus (204) einen zweiten Umlenkarm (244) aufweist, der mit dem Motorläufer (212) gekoppelt und um eine zweite Schwenkachse herum schwenkbar ist und fest mit dem zweiten Greiferfinger (232) verbunden ist, zum Bewegen des ersten Greiferfingers (231) und des zweiten Greiferfingers (232) aufeinander zu oder voneinander weg durch Schwenken des ersten Umlenkarms (241) um die erste Schwenkachse und des zweiten Umlenkarms (242) um die zweite Schwenkachse herum.

12. Greifvorrichtung gemäss einem der Ansprüche 8 bis 11, wobei der Linearmotor (1; 101; 201) ein tubularer Linearmotor ist, dessen Motorstator (10; 110; 210) einen Innendurchmesser und dessen Motorläufer (12; 112; 212) einen Aussendurchmesser aufweist, der kleiner ist als der Innendurchmesser des Motorstators (10; 110; 210), und wobei der Stator (20; 120; 220) des Konstantkraftgebers (2; 102; 202) einen Innendurchmesser und der Läufer (21; 121; 221) des Konstantkraftgebers einen Aussendurchmesser aufweist, der kleiner als der Innendurchmesser des Stators (20; 120; 220), und wobei der Läufer (21; 121; 221) des Konstantkraftgebers und der Motorläufer (12; 112; 212) über ein kreiszylindrisches Verbindungselement (15; 115; 215) aus einem magnetisch nicht-leitenden Material miteinander verbunden sind, dessen Aussendurchmesser kleiner ist als der Innendurchmesser des Stators (20; 120; 220) des Konstantkraftgebers und kleiner als der Innendurchmesser des Motorstators (10; 110; 210), so dass das Verbindungselement (15; 115; 215) sowohl in den Stator (20; 120; 220) des Konstantkraftgebers als auch in den Motorstator (10; 110; 210) hinein bewegbar ist.

13. Greifvorrichtung gemäss Anspruch 6 und Anspruch 12, wobei das Verbindungselement (15; 115; 215) zwischen dem Motorläufer (12; 112; 212) und dem Flusskonzentrator (24; 124; 224) angeordnet ist.

14. Greifvorrichtung gemäss einem der vorangehenden Ansprüche, weiterhin umfassend
- ein Gehäuse (108), wobei der Motorstator (110) des Linearmotors (101) fest im Gehäuse angeordnet ist,
- einen Greiferkopf (103), wobei
- der erste und der zweite Greiferfinger (131, 132) sowie der Umlenkmechanismus (104) am Greiferkopf (103) angeordnet sind, und
- der Greiferkopf (103) zusammen mit den daran angeordneten ersten und zweiten Greiferfingern (131, 132) sowie dem Umlenkmechanismus (104) relativ zum Gehäuse (108) um die Längsachse (116) des Motorläufers rotierbar ist, sowie
- einen Torquemotor (109), umfassend
- einen rotationsfest im Gehäuse angeordneten Torquemotorstator (190),
- einen rotationsfest mit dem Greiferkopf (103) verbundenen und relativ zum Torquemotorstator (190) um die Längsachse (116) des Motorläufers (112) rotierbaren Torquemotorrotor (191), zum Rotieren des Greiferkopfs (103) um die Längsachse (116) des Motorläufers (112).

15. Greifvorrichtung gemäss Anspruch 14, weiterhin umfassend eine Drehkopplung (183) zur Kopplung des Umlenkmechanismus (104), der an dem um die Längsachse (116) des Motorläufers (112) rotierbaren Greiferkopf (103) angeordnet ist, mit dem Motorläufer (112), zur Kraftübertragung der in der Längsrichtung wirkenden Kraft vom Motorläufer (112) und/oder vom Läufer (121) des Konstantkraftgebers (102) auf den Umlenkmechanismus (104).
